# EUROPEAN PATENT APPLICATION

(11) **EP 4 800 628 A1**
(43) Date of publication of application: **02.09.2026**
(21) Application number: 26159476.6
(22) Date of filing: 19.02.2026
(51) Int. Cl.: G06Q 30/018, G06Q 50/04, G06Q 10/087

(54) **INFORMATION PROCESSING APPARATUS, CONTROL METHOD THEREFOR, STORAGE MEDIUM, AND PRODUCT MANAGEMENT SYSTEM**

(30) Priority: 26.02.2025 JP 2025029375
(71) Applicant: Canon Kabushiki Kaisha, Tokyo 146-8501 (JP)
(72) Inventor: FUKUDA, Masato, Tokyo (JP)
(74) Representative: WESER & Kollegen Patentanwälte PartmbB

(57) **Abstract**

The present disclosure is directed to an information processing apparatus reads, from a product, a data carrier for accessing Digital Product Passport, DPP, information of the product that is managed on a blockchain; acquires, by using information in the read data carrier, first DPP information that is DPP information of a main unit of the product that is managed on the blockchain, and second DPP information that is DPP information of one or more parts installed in the product, the second DPP information being managed on the blockchain in association with the first DPP information; and outputs a specific carbon footprint based on a carbon footprint of the product included in the acquired first DPP information and a carbon footprint of each of the one or more parts included in the acquired second DPP information.

## Description

### TECHNICAL FIELD

The present disclosure relates to an information processing apparatus, a control method therefor, a storage medium, and a product management system.

### BACKGROUND

Proposed in Japanese Patent Laid-Open No. 2024-145485 and Japanese Patent Laid-Open No. 2024-145629 are techniques for calculating, at a predetermined timing, a carbon footprint (CFP) incurred during the transportation and manufacture of a product.

### SUMMARY

With the above-described conventional techniques, it is impossible to calculate a carbon footprint reflecting the actual usage of parts in a product formed from a plurality of replaceable parts.

The present disclosure enables realization of a novel scheme for acquiring a carbon footprint of a product including parts.

The present disclosure enables the realization of a novel technique for appropriately determining the timing to attempt a sale according to the content of an interaction.

The present disclosure in its first aspect provides an information processing apparatus as specified in claim 1. Optional features are specified in claim 2 to 17.

The present disclosure in its second aspect provides a method for controlling an information processing apparatus as specified in claim 18.

The present disclosure in its third aspect provides a non-transitory computer-readable storage medium as specified in claim 19.

The present disclosure in its fourth aspect provides a product management system as specified in claim 20.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a system configuration diagram pertaining to one embodiment.
FIG. 2 is a smart contract configuration diagram pertaining to one embodiment.
FIG. 3A is a flowchart relating to issuance of DPP information by a smart contract pertaining to one embodiment.
FIG. 3B is a flowchart relating to overwriting of the DPP information by the smart contract pertaining to one embodiment.
FIG. 3C is a flowchart relating to overwriting of part DPP information by the smart contract pertaining to one embodiment.
FIG. 4 is an MFP block diagram pertaining to one embodiment.
FIG. 5 is an information processing apparatus block diagram pertaining to one embodiment.
FIG. 6 is a diagram illustrating examples of an MFP data carrier pertaining to one embodiment.
FIG. 7 is a diagram illustrating a part exchange screen flow pertaining to one embodiment.
FIG. 8 is a flowchart illustrating an example of generation of a DPP information screen pertaining to one embodiment.
FIG. 9 is a diagram illustrating examples of a child token information list pertaining to one embodiment.
FIG. 10A is a diagram illustrating an example of DPP detailed information pertaining to one embodiment.
FIGS. 10B and 10C are diagrams illustrating an example of DPP detailed information pertaining to one embodiment.
FIG. 11 is a flowchart illustrating an example of part exchange processing pertaining to one embodiment.
FIG. 12 is a flowchart illustrating an example of a part exchange smart contract pertaining to one embodiment.
FIG. 13 is a diagram illustrating an example of part exchange transaction data pertaining to one embodiment.
FIG. 14 is a diagram illustrating an example of post-exchange MFP detailed information pertaining to one embodiment.
FIG. 15A is a diagram illustrating a screen flow of a carbon-footprint detailed information screen pertaining to one embodiment.
FIG. 15B is a diagram illustrating a screen flow of a carbon-footprint detailed information screen pertaining to one embodiment.
FIG. 16 is a flowchart illustrating an example of part exchange processing pertaining to one embodiment.
FIG. 17 is a flowchart illustrating an example of a part exchange smart contract pertaining to one embodiment.
FIG. 18 is a diagram illustrating an example of part exchange transaction data pertaining to one embodiment.
FIG. 19 is a diagram illustrating an example of post-exchange MFP detailed information pertaining to one embodiment.
FIG. 20A is a diagram illustrating a screen flow of a carbon-footprint detailed information screen pertaining to one embodiment.
FIG. 20B is a diagram illustrating a screen flow of a carbon-footprint detailed information screen pertaining to one embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <System Configuration>

One embodiment of the present disclosure will be described in the following. An image forming apparatus pertaining to the present embodiment is an example of an image processing apparatus. In the present embodiment, description will be provided with reference to Digital Product Passports (DPPs) as defined by Regulation (EU) 2024/1781 of the European Parliament and of the Council, and an information-processing-apparatus application (DPP tool) for accessing DPP information. A DPP creates digital information (DPP information) of a physical product, and securely records data based on events, transactions, and sustainability throughout the entire lifecycle of the product. DPP information is usually associated with a physical product via a QR Code (registered trademark), a barcode, a Near Field Communication (NFC) tag, or the like, and, in conventional DPP tools, some DPP information is displayed by scanning such data carriers provided to individual products and parts.

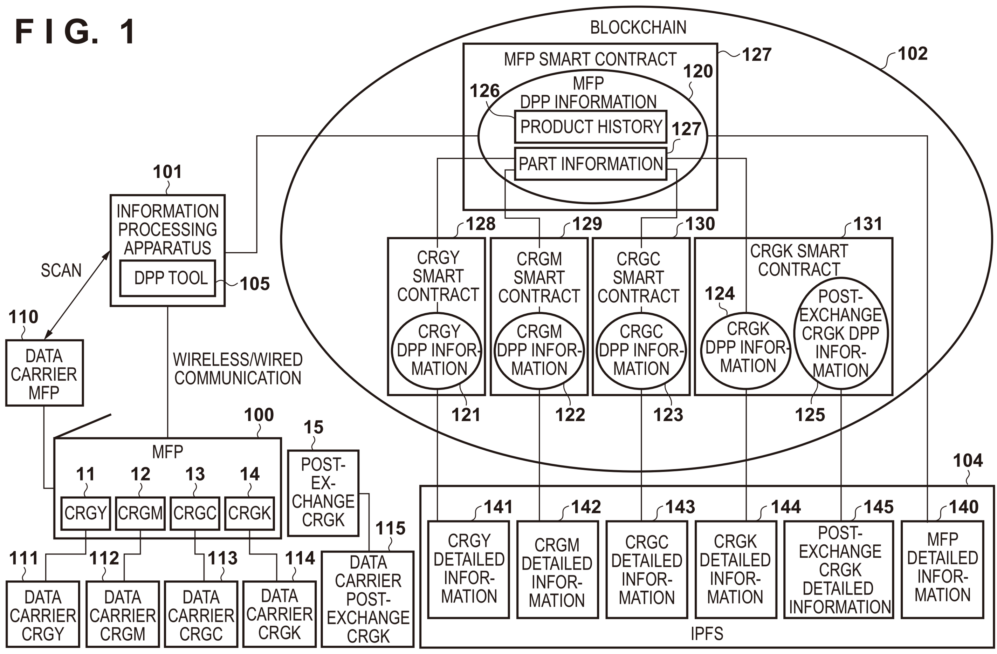

A configuration of a system pertaining to one embodiment will be described with reference to FIG. 1. The present system is formed so as to include an information processing apparatus 101 on which a tool (DPP tool) that uses Digital Product Passports operates, an image forming apparatus (MFP 100), and Digital Product Passport information (MFP DPP information 120).

The MFP 100 is an image forming apparatus, and is mentioned as one product that is managed via DPP information (first DPP information) 120, which is MFP DPP information. The MFP 100 has installed therein toner cartridges (cartridges) of the colors yellow (CRGY 11), magenta (CRGM 12), cyan (CRGC 13), and black (CRGK 14). Furthermore, replacement CRGK 15 is a toner cartridge that is not installed in the MFP 100 and can be exchanged with the black cartridge installed in the MFP 100 as a black cartridge. For CRGY 11, CRGM 12, CRGC 13, CRGK 14, and replacement CRGK 15, pieces of part DPP information (second DPP information) 121, 122, 123, 124, and 125 indicating DPP information corresponding to the respective cartridges are stored on a blockchain. The DPP information 120 corresponding to the MFP 100 is stored so as to be linked with the pieces of part DPP information 121 to 124 included in part information 127. By restricting data updates of the pieces of part DPP information 121 to 124 to those performed via the DPP information 120, the DPP information 120 manages the part DPP information while each cartridge is attached to the MFP 100. In regard to the DPP information 125 corresponding to replacement CRGK 15, which is not installed in the MFP 100, access is not restricted by the product DPP information, either.

The information processing apparatus 101 scans a data carrier 110 (barcode, QR code, NFC tag, or the like) of the MFP 100, and launches an application (DPP tool 105). The DPP tool 105 accesses the DPP information 120 and displays MFP detailed information 140, a product history 126, the part information 127, etc. Furthermore, the DPP tool 105 executes overwriting of the MFP detailed information 140, and the product history 126 and the part information 127 in the DPP information 120.

The blockchain 102 is a distributed ledger that is shared via peer-to-peer (P2P) communication among a plurality of information communication devices deployed as nodes, and is a system for sharing, in a chain structure, a history of a plurality of pieces of transaction data (transactions) organized into blocks. The blockchain 102 is characterized in that recorded transactions are tamper-proof and lossless, and the owner can be reliably identified.

The InterPlanetary File System (IPFS) 104 is a distributed file system that is shared via P2P communication among a plurality of information communication devices deployed as nodes. In the present embodiment, in order to prevent an increase in the data size of the blockchain 102, detailed data included in the DPP information is stored in the IPFS. For example, the detailed data includes the MFP detailed information 140, CRGY detailed information 141, CRGM detailed information 142, CRGC detailed information 143, CRGK detailed information 144, and post-exchange CRGK detailed information 145. A configuration is adopted in which addresses of detailed information corresponding to the pieces of DPP information 120 to 125 are held; however, the detailed data may be stored in the blockchain 102, or the detailed information may be stored in a Hypertext Transfer Protocol (HTTP) server.

An MFP smart contract 103 is a program deployed as part of a block that constitutes the blockchain 102 and that is indicated by a contract address; the MFP smart contract 103 is a program that is automatically executed by being triggered by received transactions addressed to the contract address. The MFP smart contract 103 is executed by any node (information processing apparatus) constituting the blockchain 102, and the execution result is shared among all nodes. The MFP smart contract 103 pertaining to the present disclosure executes processes (programs) for issuing DPP information, overwriting the DPP information 120, overwriting the pieces of part DPP information 121 to 124, overwriting the MFP detailed information 140, and exchanging part DPP information, etc. A CRGY smart contract 128 executes processes (programs) for changing the owner of the corresponding part DPP information 121 and overwriting detailed information 141 associated with the DPP information. A CRGM smart contract 129, a CRGC smart contract 130, and a CRGK smart contract 131 are also similar to the CRGY smart contract 128.

The data carrier 110 stores information for accessing the DPP information 120 of the MFP 100, and is provided together with the product by means of a QR code, a barcode, an NFC tag, or the like. Data carriers are in various forms; they may be printed on product manuals, warranty cards, and the housing of products, or may be held within products (as NFC tags). In FIG. 1, the link between the data carrier 110 and the MFP 100 is indicated by connecting the two via a line. Similarly, data carriers 111 to 115 store therein information for accessing the pieces of part DPP information 121 to 125. Furthermore, the links between each of the data carriers 111 to 115 and the corresponding one of CRGY 11, CRGM 12, CRGC 13, CRGK 14, and replacement CRGK 15 are indicated by connecting the two via a line.

The DPP information 120 is a block stored on the blockchain 102. The DPP information 120 securely records, on the blockchain 102, data based on events, transactions, and sustainability throughout the entire lifecycle of the MFP 100, and guarantees immutability, transparency, efficiency, and decentralization of the DPP information. The MFP detailed information 140, the product history 126, and the part information 127 are shown in the DPP information 120 illustrated in FIG. 1; however, the DPP information 120 may also include information regarding lifespan, maintenance, carbon footprint, etc. The pieces of part DPP information 121 to 124 corresponding to CRGY, CRGM, CRGC, and CRGK each indicate DPP information of a cartridge installed in the MFP 100. These pieces of information are managed in a parent-child relationship with the DPP information 120, and referencing, overwriting, exchanging, etc., of each part DPP information is executed via the DPP information 120. The DPP information 125 corresponding to replacement CRGK indicates DPP information of a cartridge that is not installed in the MFP 100, and referencing, overwriting, exchanging, etc., of the part DPP information can be executed without using the DPP information 120 as an intermediary. However, if information is overwritten via an exchanging process such that replacement CRGK is installed in the MFP 100, referencing, overwriting, and exchanging relating to the DPP information 125 of replacement CRGK need to be executed via the DPP information 120. The DPP information 120 has a token ID identifying the main unit of the product, and is stored on the blockchain 102 as a Non-Fungible Token (NFT). Each of the pieces of part DPP information 121 to 125 is similarly stored on the blockchain 102 as an NFT.

In the present disclosure, the DPP information 120 and the pieces of part DPP information 121 to 125 are stored on the blockchain 102 as NFTs; however, DPP information need not be in the form of an NFT, and it is sufficient that DPP information be at least stored as a block on the blockchain 102. Furthermore, the system may be configured such that part DPP information is managed using a blockchain (unillustrated) and a smart contract (unillustrated) that are dedicated to parts, separately from the blockchain 102. Furthermore, part DPP information may be managed by the same smart contract as the MFP smart contract 103 of the DPP information 120.

By managing the DPP information 120 using the present system configuration, the pieces of part DPP information 121 to 124 of parts installed in the product can be accessed via the MFP DPP information 120. Furthermore, by linking the pieces of part DPP information 121 to 124 with the DPP information 120 via the part information 127, updating of part DPP information when a part is exchanged with a replacement part can also be performed via the DPP information 120.

### <Smart Contract>

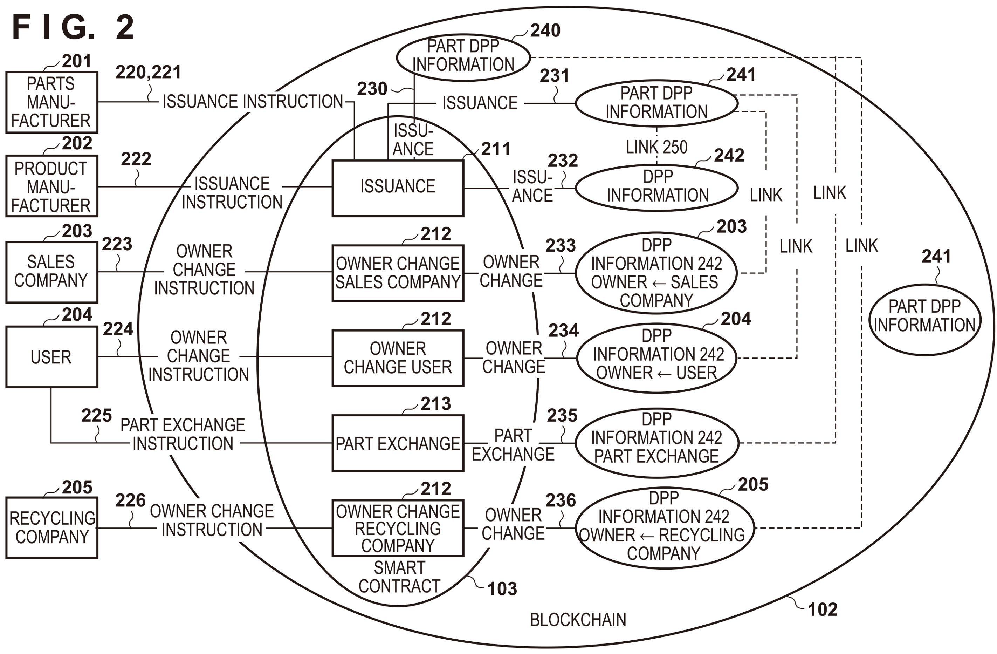

Transaction processes by the MFP smart contract 103 pertaining to one embodiment will be described with reference to FIG. 2. The MFP smart contract 103 processes instructions included in received transactions to execute processes for generating DPP information and part DPP information blocks, changing owners, exchanging a part with a replacement part, etc. Instructions relating to DPP information are executed in individual stages of corporate activities (value chain) such as manufacture, sales, disposal, and recycling, and in events corresponding to the state of use by a customer (user) using a product. Here, description will be provided of DPP information-related processes relating to a typical product and parts installed in the product. Note that the parts manufacturer 201, product manufacturer 202, sales company 203, user 204, and recycling company 205 described in FIG. 2 and in the following are operation entities that are shown for ease of explanation. However, the processes are actually executed by devices such as personal computers. Furthermore, the term "DPP tool 105" is simply used in the following to refer to the DPP tools executed on the respective devices.

After manufacturing the parts, the parts manufacturer 201 transmits transactions of issuance instructions 220, 221 to the MFP smart contract 103 using the DPP tool 105 to issue part DPP information of the manufactured parts. The issuance instructions 220, 221 each include an issuance instruction to the MFP smart contract 103, the MFP detailed information 140, the product history 126, and the owner (the parts manufacturer 201 is set). Upon receiving the issuance instructions 220, 221, the MFP smart contract 103 executes issuance 211 to generate transactions of issuances 230, 231, and adds blocks of part DPP information 240 and 241 to the blockchain 102. Once the part DPP information 240, 241 is added to the blockchain 102, the DPP tool 105 receives link information to the part DPP information 240, 241, and generates data carriers for the parts to store the link information together with the manufactured parts. For example, a manufactured part and part DPP information are linked to one another by printing a QR code indicating the link to the part DPP information on the part or by writing the link to the part DPP information to an NFC tag in the part. Note that the MFP smart contract 103 executes processes for issuing part DPP information of the parts and DPP information of the product based on the same issuance instruction.

After manufacturing the product, the product manufacturer 202 transmits a transaction of an issuance instruction 222 to the MFP smart contract 103 using the DPP tool 105 to issue DPP information relating to the product. The transaction of the issuance instruction 222 includes the issuance instruction 222 to the MFP smart contract 103, the MFP detailed information 140, the product history 126, the part information 127, and the owner, to which the product manufacturer 202 is set. The part information 127 stores a link to the part DPP information 241 of the part installed in the product. Upon receiving the issuance instruction 222, the MFP smart contract 103 executes the issuance 211 to generate a transaction of issuance 232, and adds a block of DPP information 242 to the blockchain 102. Once the DPP information 242 is added to the blockchain 102, the DPP tool 105 receives link information to the DPP information 242, and generates a data carrier for the product to store the link information together with the manufactured product. For example, the manufactured product and the DPP information are linked to one another by printing a QR code which encodes the link to the DPP information on the product or by writing the link to the DPP information to an NFC tag.

Upon stocking the product from the product manufacturer 202 to sell the product, the sales company 203 uses the DPP tool 105 and changes the owner of the DPP information 242 to the sales company 203. The DPP tool 105 transmits a transaction of an owner change instruction 223 to the MFP smart contract 103. The transaction of the owner change instruction 223 includes an owner change instruction to the MFP smart contract 103, and the sales company 203 as the post-change owner. Upon receiving the owner change instruction 223, the MFP smart contract 103 executes owner change 212 to generate a transaction of owner change 233, and adds a block of the DPP information 242, in which the owner has been changed to the sales company 203, to the blockchain 102. In such a manner, the DPP information 242 continues to be stored on the blockchain 102 as a non-fungible block while the information stored therein is updated. Note that the link in the part information 127 continues to be held, without any change, in a state in which the link is the link to the part DPP information 241.

At the point when the user 204 purchases the product from the sales company 203, the user 204 uses the DPP tool 105 and changes the owner of the DPP information 242 to the user 204. The DPP tool 105 transmits a transaction of an owner change instruction 224 to the MFP smart contract 103. The transaction of the owner change instruction 224 includes an owner change instruction to the MFP smart contract 103, and the user 204 as the post-change owner. Upon receiving the owner change instruction 224, the MFP smart contract 103 executes the owner change 212 to generate a transaction of owner change 234, and adds a block of the DPP information 242, in which the owner has been changed to the user 204, to the blockchain 102.

Upon exchanging the part installed in the product with a replacement part, the user 204 uses the DPP tool 105 and changes the part information 127 in the DPP information 242 to the part DPP information 240 relating to the replacement part. The DPP tool 105 transmits a transaction of a part exchange instruction 225 to the MFP smart contract 103. The transaction of the part exchange instruction 225 includes a part exchange instruction to the MFP smart contract 103, and the part DPP information 240 of the replacement part. Upon receiving the part exchange instruction 225, the MFP smart contract 103 executes part exchange 213 to generate a transaction of part exchange 235, and adds a block of the DPP information 242, in which the part information 127 has been changed to a link to the part DPP information 240, to the blockchain 102. The pre-exchange part DPP information 241 remains on the blockchain 102 until the owner is changed. When the user disposes of or recycles the pre-exchange part, the owner of the part DPP information 241 is changed to the disposal/recycling company; thus, the lifecycle of a part installed in the product can also be managed.

Upon disposing of the product, the recycling company 205 uses the DPP tool 105 and changes the owner of the DPP information 242 to the recycling company 205. The DPP tool 105 transmits a transaction of an owner change instruction 226 to the MFP smart contract 103. The transaction of the owner change instruction 226 includes an owner change instruction to the MFP smart contract 103, and the recycling company 205 as the post-change owner. Upon receiving the owner change instruction 226, the MFP smart contract 103 executes the owner change 212 to generate a transaction of owner change 236, and adds a block of the DPP information 242, in which the owner has been changed to the recycling company 205, to the blockchain 102.

Up to this point, the details of processes relating to the issuance of the DPP information 242 and the part DPP information 240 and 241, the owner change 212, and the part exchange 213 that are executed in individual stages of the lifecycle of the product by the MFP smart contract 103 have been described. In such a manner, processes from the generation to the update of DPP information and part DPP information can be executed by using the MFP smart contract 103 of the blockchain 102.

### <Flowchart of Smart Contract>

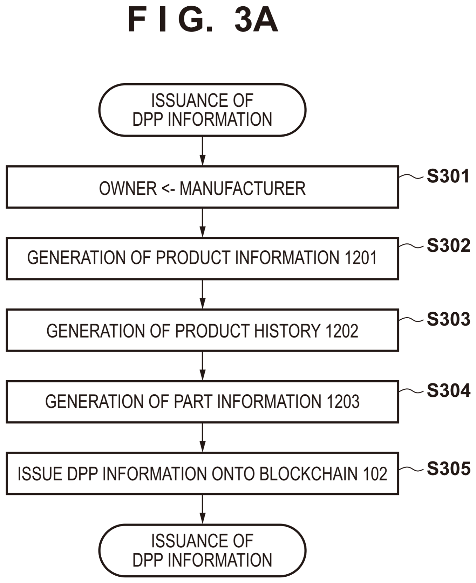

A procedure of processes executed by the MFP smart contract 103 pertaining to one embodiment will be described with reference to FIGS. 3A-3C. Here, description will be provided of processes for the issuance of DPP information, overwriting of the DPP information (including owner change), and part exchange in the DPP information. For example, the processes described in the following are each realized by a CPU of a device executing the smart contract 103 executing a program. The numerals starting from "S" indicate step numbers of individual processes. This similarly applies to other drawings to be described later.

FIG. 3A illustrates a process relating to the issuance of DPP information. In step S301, the MFP smart contract 103 receives a transaction of an issuance instruction from the DPP tool 105 of a manufacturing company, and writes the manufacturing company having issued the issuance instruction to the owner in block information to be added to the blockchain 102. Subsequently, in step S302, the MFP smart contract 103 writes DPP information 120 as block information to be added to the blockchain 102. Because the issuance is performed at the timing when a product is manufactured, a product name, a product ID, a location of manufacture, a date of manufacture, etc., are written as the product information.

In step S303, the MFP smart contract 103 writes product history 126 as block information to be added to the blockchain 102. As the product history 126, information such as the date and time of manufacture, the name of the manufacturer, and the manufacturing factory is written. In step S304, the MFP smart contract 103 writes part information 127 as block information to be added to the blockchain 102. As the part information 127, a link to part DPP information for linking the part DPP information with the DPP information, a part name, the position of the part, etc., are written. In step S305, the MFP smart contract 103 issues the DPP information onto the blockchain 102. The MFP smart contract 103 adds the block to be added to one of the nodes for constituting the blockchain 102 as a pending block in order to issue the DPP information, and ends the process in the present flowchart. The pending block is subjected to a verification as to whether the block to be added onto the blockchain is acceptable, and is added as the last block onto the blockchain 102 if the block is acceptable.

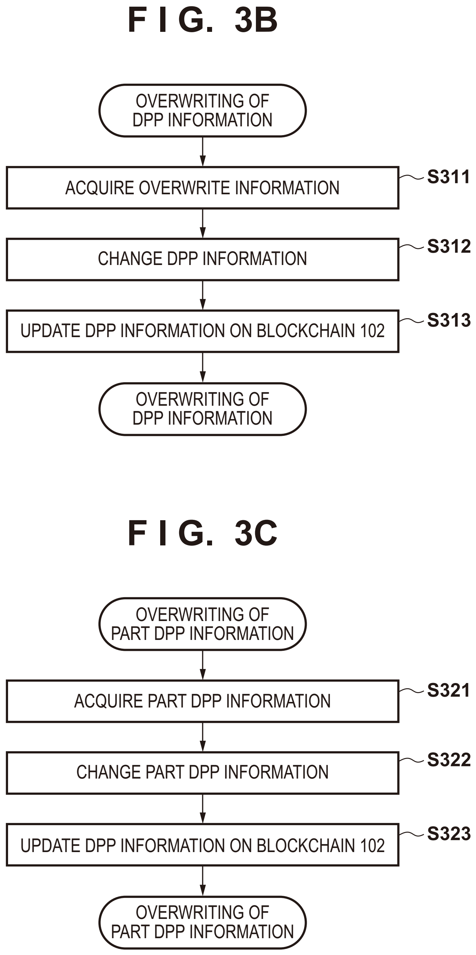

FIG. 3B illustrates a process relating to the overwriting of the DPP information. In step S311, the MFP smart contract 103 receives a transaction including a DPP information overwrite instruction from the DPP tool 105, and acquires overwrite information included in the overwrite instruction. The overwrite information is received from the DPP tool 105 of the sales company 203 included in the owner change instruction 223 in FIG. 2, or the DPP tool 105 of the user 204 or the recycling company 205. Furthermore, maintenance information of part DPP information recorded in the part information 127, etc., are also included in the overwrite information.

In step S312, as block information to be added to the blockchain 102, the MFP smart contract 103 applies a change to the DPP information based on the overwrite information. In step S313, the MFP smart contract 103 adds the changed DPP information onto the blockchain 102, and ends the process in the present flowchart.

FIG. 3C illustrates a process relating to the overwriting of part DPP information. In step S321, the MFP smart contract 103 receives a transaction including a part DPP information overwrite instruction, and acquires part DPP information included in the overwrite instruction. In step S322, based on the overwrite information included in the part DPP information overwrite instruction, the MFP smart contract 103 applies a change to the acquired part DPP information. For example, to change the residual toner amount in the part DPP information 121, the MFP smart contract 103 overwrites the residual toner amount value in the part DPP information 121 with the residual toner amount value received in the overwrite instruction. In step S323, the MFP smart contract 103 adds the changed part DPP information onto the blockchain 102, and ends the process in the present flowchart.

### <Hardware Configuration of MFP>

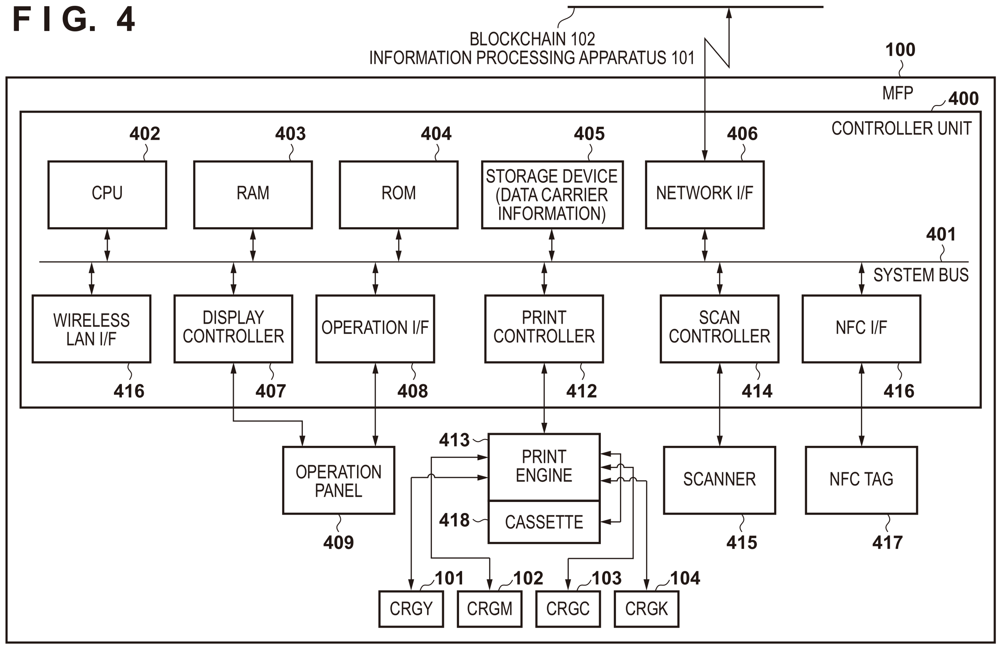

An example of a hardware configuration of the MFP 100 pertaining to one embodiment will be described with reference to FIG. 4. FIG. 4 illustrates an example of a hardware configuration of a controller unit 400 of the MFP 100 and devices built into the MFP 100. The MFP 100 includes the controller unit 400, an operation panel 409, a print engine 413, a scanner 415, an NFC tag 417, and a cassette 418. Furthermore, CRG 11, CRG 12, CRG 13, and CRG 14 are detachably attached to the MFP 100.

In the controller unit 400, a CPU 402, a RAM 403, a ROM 404, a storage device 405 and wireless LAN I/F 419 are directly connected to a system bus 401. Furthermore, the controller unit 400 is also connected to external devices via a network I/F 406, a display controller 407, an operation I/F 408, a print controller 412, and a scan controller 414. These units are connected to the system bus 401, and a capable of communicating with one another.

The CPU 402 is a central processing device that controls the operation of the entire controller unit 400. The RAM 403 is a volatile memory. The ROM 404 is a non-volatile memory, and a boot program of the CPU 402 is stored therein. The storage device 405 is a storage device (e.g., a hard disk drive (HDD)) that has a larger capacity than the RAM 403. In the storage device 405, an MFP control program to be executed by the CPU 402 is stored. The storage device 405 may be replaced with another storage device, such as a solid-state drive (SSD), that has functions equivalent to those of a hard disk drive.

The CPU 402 executes the boot program stored in the ROM 404 at startup, such as when the power is turned on. This boot program is for reading out the control program stored in the storage device 405 and loading the control program into the RAM 403. Following execution of the boot program, the CPU 402 executes the control program loaded into the RAM 403 to control the MFP 100. Furthermore, the CPU 402 also stores data to be used during execution of the control program into the RAM 403 to perform reading and writing thereof. Various settings that are necessary during execution of the control program and image data read using the scanner 415 can be further stored in the storage device 405 so that the CPU 402 can perform reading and writing thereof.

The CPU 402 communicates with the information processing apparatus 101 on a network via the network I/F 406, and communicates with the blockchain 102 on the Internet via a gateway. Note that, in the case of an MFP installed at a printing service (unillustrated), the network I/F 406 is not essential as long as communication with the information processing apparatus 101 can be performed. The technique of the present disclosure is applicable as long as the MFP can alternatively communicate one-to-one with the information processing apparatus 101 via Wi-Fi Direct, a USB cable, Bluetooth Low Energy (BLE), or the like, even if the MFP is not connected to the Internet.

The display controller 407 controls, in response to an instruction from the CPU 402, a screen displayed on a touch panel on the operation panel 409 connected thereto. The operation I/F 408 inputs and outputs operation signals. The operation I/F 408 is connected to the operation panel 409, and, when the touch panel is pressed, the CPU 402 acquires, via the operation I/F 408, the coordinates of the touch panel that have been pressed.

The print controller 412, in response to an instruction from the CPU 402, transmits a control command and image data to the print engine 413 connected thereto. The print engine 413 prints received image data on a sheet in accordance with the control command received from the print controller 412. Cartridges of the colors yellow (CRGY 11), magenta (CRGM 12), cyan (CRGC 13), and black (CRGK 14) are built into the print engine 413, and a memory tag is attached to each cartridge. The print engine 413 is capable of writing and reading information to/from each cartridge via an I/F (unillustrated) for reading the memory tags of the cartridges. Each memory tag holds information of a data carrier for accessing part DPP information, and the part DPP information data carrier of each cartridge can be read by the print controller 412 via the print engine 413.

The cassette 418 is connected to the print engine 413, and stores therein recording sheets to be supplied to the print engine 413. Note that, while cartridges are described in regard to part DPP information in the present example, all replaceable parts, such as the print engine 413, the scanner 415, the operation panel 409, the storage device 405, etc., can be stored in the part information 127 in the DPP information 120.

The scan controller 414, in response to an instruction from the CPU 402, transmits a control command to the scanner 415 connected thereto and writes image data received from the scanner 415 to the RAM 403. The scanner 415, in accordance with the control command received from the scan controller 414, uses an optical unit and reads the document placed on a platen glass (unillustrated) or an ADF of the MFP 100. The document data read by the scanner 415 is stored in the RAM 403 as image data. The image data is converted into a file format such as PDF, JPEG, or TIFF by the CPU 402 in accordance with file format settings, and is stored in the storage device 405. Furthermore, the scanner 415 can also function as a reading unit and read the data carriers of CRG11, CRG12, CRG13, and CRG14; the scanner 415 can scan a data carrier provided to a cartridge and store data in the RAM 403.

An NFC I/F 416 is an I/F that allows the CPU 402 to communicate with the NFC tag 417, which has a contactless IC chip embedded therein. The NFC tag 417 is built into the MFP 100 as a DPP data carrier, and, when carrier data is read by moving an NFC reader close to the NFC tag 417, the DPP tool of the MFP 100 is launched and DPP information is displayed.

### <Hardware Configuration of Information Processing Apparatus>

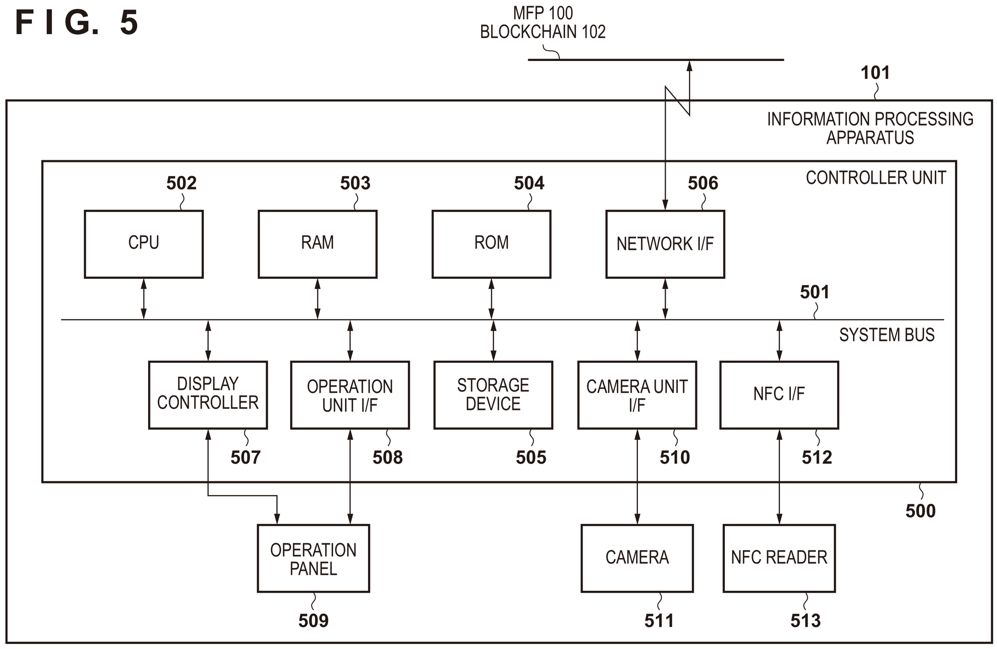

An example of a hardware configuration of devices built into the information processing apparatus 101 pertaining to one embodiment will be described with reference to FIG. 5. The information processing apparatus 101 includes a controller unit 500, an operation panel 509, a camera 511, and an NFC reader 513.

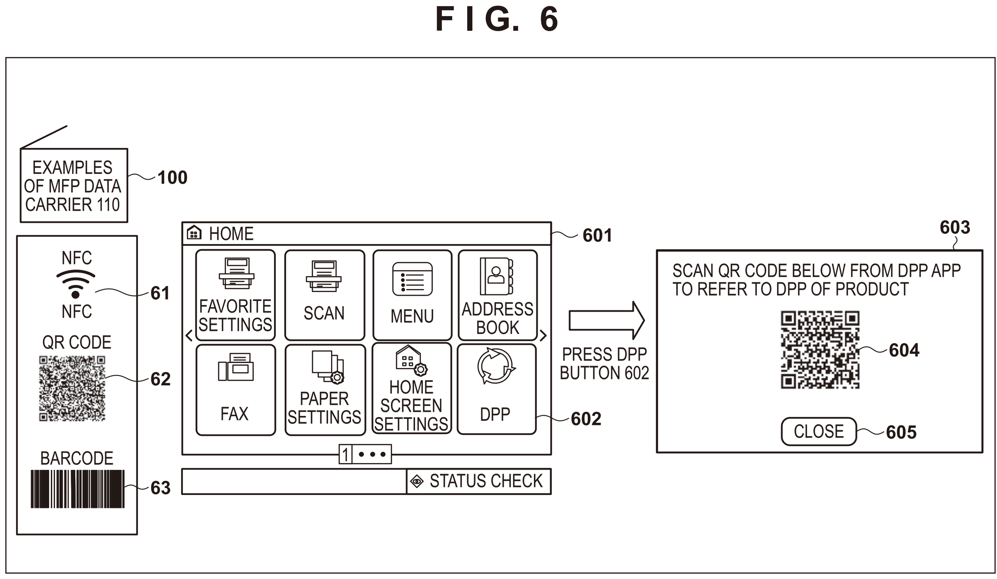

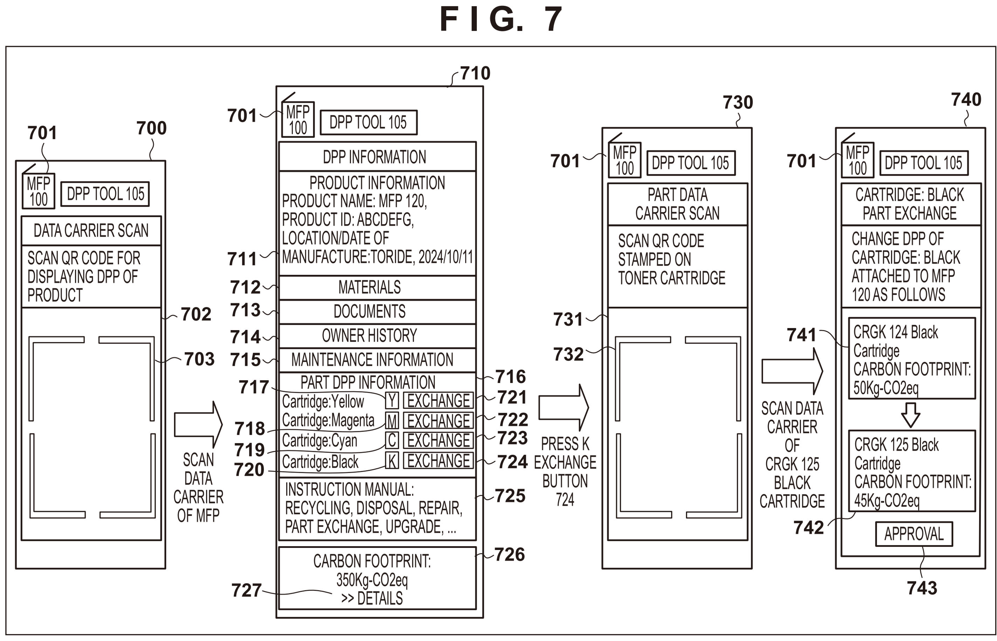

The controller unit 500 includes a CPU 502, a RAM 503, a ROM 504, a storage device 505, a network I/F 506, a display controller 507, and an operation unit I/F 508 that are connected to a system bus 501. The display controller 507 and the operation unit I/F 508 are connected to the operation panel 509, and execute control of buttons on the panel controlled by a user and control for updating a screen displayed on the operation panel 509. Examples of transition between screens on the operation panel 509 in the present example are illustrated in FIGS. 6 and 7 taking a touch panel as an example, but there is no limitation thereto.

The CPU 502 is a central processing device that controls the operation of the entire controller unit 500. The RAM 503 is a volatile memory. The ROM 504 is a non-volatile memory, and a boot program of the CPU 502 is stored therein. The storage device 505 is a storage device (e.g., a hard disk drive (HDD) or a solid-state drive (SSD)) that has a larger capacity than the RAM 503. The storage device 505 holds therein address information indicating the owner of DPP information on the blockchain 102, a secret key, the DPP information, and the DPP tool 105. Upon start-up of the information processing apparatus 101, the CPU 502 executes the boot program stored in the ROM 504. This boot program is for reading out a control program stored in the storage device 505 and loading the control program into the RAM 503. Following execution of the boot program, the CPU 502 executes the control program loaded into the RAM 503 to execute display and input control. Furthermore, the CPU 502 also stores data to be used during execution of the control program into the RAM 503 to perform reading and writing thereof. Furthermore, the CPU 502 communicates with the blockchain 102, the MFP smart contract 103, and the MFP 100 via the network I/F 506.

The display controller 507 controls, in response to an instruction from the CPU 502, a screen displayed on a touch panel on the operation panel 509 connected thereto. The operation unit I/F 508 performs input and output of operation signals to/from the operation panel 509. When the touch panel on the operation panel 509 is pressed, the CPU 502 acquires, via the operation unit I/F 508, the coordinates of the touch panel that have been pressed.

A camera unit I/F 510 is an I/F that allows the CPU 502 to communicate with the camera 511 via the system bus 501. The camera 511 operates as a trigger for launching the DPP tool 105 by scanning the data carrier 110 of the MFP 100. An NFC I/F 512 is an I/F that allows the CPU 502 to communicate with the NFC reader 513 via the system bus 501. The NFC reader 513 operates as a trigger for launching the DPP tool 105 by scanning the data carrier 110 written to the NFC tag 417. Here, the camera 511 and the NFC reader 513 are examples of a reading unit.

### <Display Example of Data Carrier>

The data carrier 110 of the MFP 100 pertaining to one embodiment will be described with reference to FIG. 6. In FIG. 6, examples of the data carrier 110 and the display state of the data carrier 110 are illustrated.

An NFC 61, a QR code 62, and a barcode 63 are illustrated as examples of the data carrier 110 of the MFP 100. The data carrier 110 includes information for acquiring the DPP information 120 and launching the DPP tool. The information is encoded, and is affixed to the housing of the MFP 100 in the form of a label or installed inside the MFP 100.

Reference symbol "601" indicates a home screen of the MFP 100. By operating a DPP button 602 that is selectably displayed on the home screen 601, a DPP information display screen 603 is displayed. In DPP information display screen 603, an example is illustrated in which a QR code image 604 is displayed as the data carrier. In the data carrier 110, as the DPP information 120, information displayed on a later-described DPP information screen 710 may be directly stored, or the URL of a server storing the information displayed on the DPP information screen 710 may be stored.

For example, if the data carrier 110 is code information such as a QR code, a display is performed by using the camera 511 of the information processing apparatus 101 and reading the code information into which the URL is encoded. If the data carrier 110 is an NFC, a URL stored in the storage device 405 of the MFP 100 is displayed by the NFC reader 513 of the information processing apparatus 101 reading the URL via the NFC tag 417. In such cases, the DPP information 120 is received via a network from a device such as the access-destination server by the information processing apparatus 101 accessing the acquired URL. Furthermore, the received information may be screen information such as HTML, in which case the screen information is displayed by the Web browser function of the DPP tool 105. Furthermore, the information acquired or received by the DPP tool 105 may include not only the DPP information 120 but also part DPP information stored in association with the DPP information 120.

### <Exchange Flow of DPP Tool>

Screen display pertaining to one embodiment in a case in which a cartridge is exchanged with a replacement cartridge will be described with reference to FIG. 7. FIG. 7 illustrates an example of screen display in a case in which the data carrier 115 stamped on CRGK 15 is scanned using the DPP tool 105 and a cartridge in the DPP information 120 is exchanged with a replacement part. The screens of the DPP tool 105 described with reference to FIG. 7 are displayed on a display unit such as the operation panel 509 of the information processing apparatus 101.

A data-carrier scan screen 700 is displayed when the DPP tool 105 is launched from the home screen (unillustrated) of the information processing apparatus 101. In region 701, a photograph or the like of the product may be displayed so that the product corresponding to the displayed DPP information can be readily recognized. In region 702, an image being captured by the camera 511 of the information processing apparatus 101 is displayed in real time.

When the QR code 62 or the QR code image 604 is captured within a scan region 703, the DPP tool 105 decodes the captured QR code and displays a DPP information screen 710 based on the DPP information 120 indicated by the data carrier 110. Product information 711 is a screen for displaying the product information included in the DPP information 120, and indicates the product name, product ID, location of manufacture, and date of manufacture in the present embodiment. Furthermore, the serial number, weight, capacity, manufacturer ID, etc., are displayed on a details screen as product information. The details screen is displayed when the region of the product information 711 is operated. Each of the details screens described in the following is also displayed when a corresponding region is operated.

In materials 712, in addition to information relating to the types and countries of origin of the materials and parts used to manufacture the product, and the chemical substances, plastics, components, and substances that were used, recycled and recovered materials, etc., are displayed on a details screen. In documents 713, the URL or the like of the document(s) to be consulted when using the product is displayed on a details screen. Furthermore, the document(s) displayed in documents 713 may be limited in accordance with who (organization, person concerned) is using the DPP tool. For example, a configuration may be adopted such that a user manual is displayed for a user using the product, and a service manual is displayed for a repair company carrying out maintenance of the product. In owner history 714, a history of owners, ownership start dates, etc., in the product cycle from manufacture of the product to sales, disposal, recycling, etc., is displayed on a details screen. In maintenance information 715, information such as repairable parts, materials, etc., of the product, information about actual repair work that was necessary throughout the product lifetime, etc., are displayed on a details screen. The details screen includes details such as the location where repair was carried out, the dealer, the details and cost of repair, the reason for repair, supplementary notes, etc.

Information relating to parts installed in the product is displayed in part DPP information 716, and, in the present embodiment, an example of cartridges (Y, M, C, and K) installed in the MFP 100 is illustrated. Note that the screen transitions to part DPP information screens for the individual cartridges when button Y 717 for the yellow cartridge, button M 718 for the magenta cartridge, button C 719 for the cyan cartridge, and button K 720 for the black cartridge are operated. Furthermore, in part DPP information 716, exchange buttons corresponding to the individual cartridges (Y exchange button 721, M exchange button 722, C exchange button 723, and K exchange button 724) are displayed. When an exchange button (721, 722, 723, or 724) is operated, a part data-carrier scan screen for the corresponding cartridge is displayed. The exchange buttons are examples of a display object.

Instruction manual 725 is operated to consult instruction manuals for carrying out recycling, disposal, repair, part exchange, and upgrades, and each instruction manual can be viewed by performing an operation. In carbon footprint 726, the amount of carbon dioxide emitted (consumed) for the manufacture, materials, and distribution of the MFP 100, and the amount of carbon dioxide emitted (consumed) for the manufacture, materials, and distribution of the cartridges (Y, M, C, and K) installed in the MFP 100 are expressed in K-CO2eq. Furthermore, when a details button 727 is operated, a carbon-footprint detailed information screen 1510 showing a per-item detailed breakdown for each product and part in carbon footprint 726 is displayed. Here, there may be cases in which carbon footprint information is not included in DPP information of a certain part. A configuration may be adopted such that, in such a case, an error is displayed on the operation panel 409 or 509, or the like at the point when the part is attached, for example. Alternatively, a configuration may be adopted such that, if the type of part that has been attached can be identified, a predetermined carbon footprint value corresponding to when the part is equivalent to new is used.

The part data-carrier scan screen 730 is a data-carrier image-capture screen displayed by the DPP tool 105 when the K exchange button 724 on the DPP information screen 710 is operated. In region 731, an image being captured by the camera 511 of the information processing apparatus 101 is displayed in real time. When the QR code (unillustrated) printed (presented) on replacement CRGK 15, which is the K cartridge to be attached, is captured within a scan region 732, the DPP tool 105 decodes the captured QR code and displays a part exchange screen 740 for the black cartridge.

In the part exchange screen 740, part information of CRGK 14, which is a used part, is displayed in region 741, and part information of replacement CRGK 15, which is the replacement part, is displayed in region 742. Here, carbon footprints are shown as an example of the part information in regions 741 and 742; however, the part information may be materials, or the location of manufacture, date of manufacture, manufacturer, etc. Furthermore, when a part is a recycled product, an icon indicating that the part is a recycled product may be displayed. Furthermore, a configuration may be adopted such that the displayed content is changed depending on part manufacturer. For example, carbon-footprint detailed information may be displayed as detailed part information for a part manufactured by the manufacturer providing the MFP 100. When an approval button 743 is operated, the CPU 502 of the information processing apparatus 101 generates transaction data for executing part exchange 213, and transmits the transaction data to the MFP smart contract 103. Once part exchange is executed, the information regarding CRGK stored in the part information 127 is overwritten with post-exchange CRGK detailed information 145, which is part DPP information 125 of CRGK.

### <Procedure of Processes for Generating DPP Information Screen>

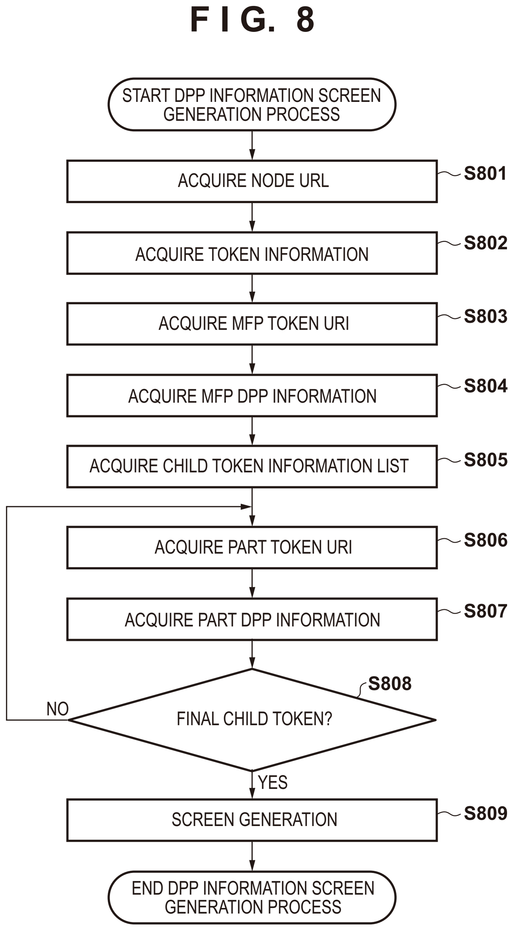

A procedure of processes for generating the DPP information screen 710 pertaining to one embodiment will be described with reference to FIG. 8. For example, the processes described in the following are realized by the CPU 502 of the information processing apparatus 101 loading and executing one or more programs stored in the ROM 504 and the storage device 505 in the RAM 503.

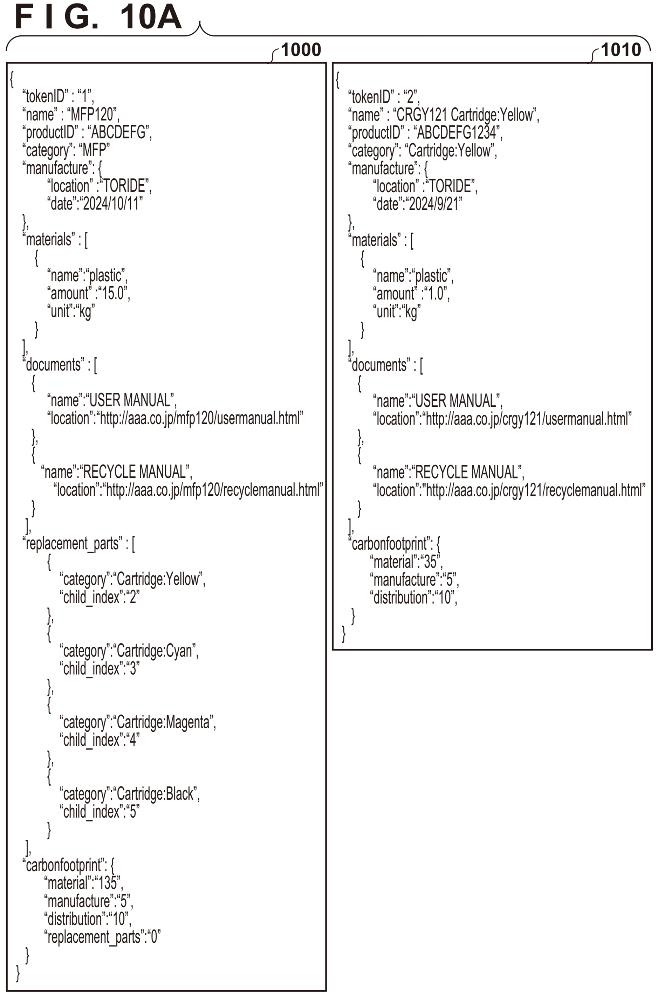

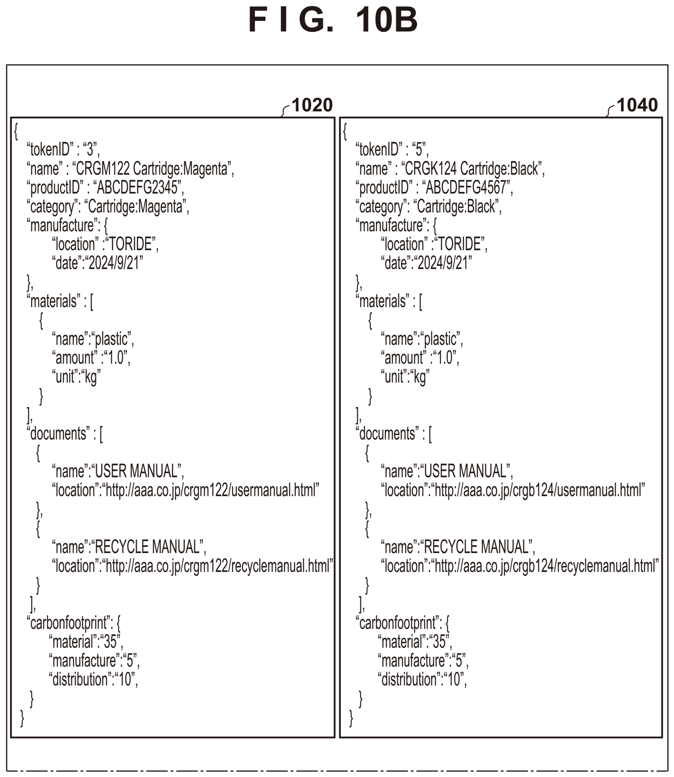

In step S801, the CPU 502 acquires, from the storage device 505, a node URL that is a URL indicating one of the nodes belonging to the blockchain 102. Subsequently, in step S802, the CPU 502 decodes the data carrier 110 captured using the camera 511 to acquire the contract address of the MFP smart contract 103 and the token ID of the DPP information 120. In step S803, the CPU 502 transmits, to the node URL, a token URI acquisition method transaction in which the contract address and the token ID are set as arguments. Thus, the CPU 502 acquires an MFP token URI that is information indicating the location where the MFP detailed information 140 (1000 in FIG. 10A) is stored. The token storage location may be an HTTP server or the IPFS. FIGS. 10A and 10B-10C will be described in detail later.

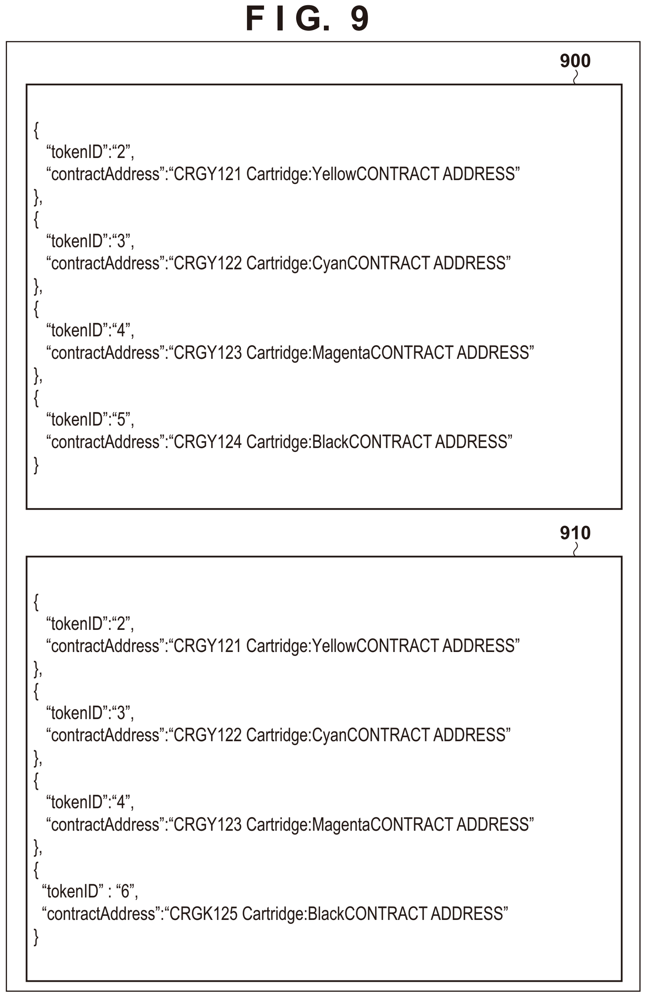

In step S804, the CPU 502 acquires the MFP detailed information 140 (1000 in FIG. 10A) based on the token URI. In step S805, the CPU 502 transmits, to the node URL, a child token information acquisition method transaction in which the contract address and the token ID are set as arguments, and acquires a child token information list 900 (FIG. 9) included in the DPP information 120 and sets a reference index to 0. As illustrated in FIG. 9, the child token information list 900 includes the respective token IDs 2 to 5 of the cartridges 11 to 14, and the respective contract addresses of the cartridges 11 to 14.

In step S806, the CPU 502 transmits, to the node URL, a token URI acquisition method transaction in which the part token URI and the part contract address of an element located at the reference index in the child token information list are set as arguments. Thus, the CPU 502 acquires a part token URI that is information indicating the location where part DPP information (1010 in FIG. 10A; 1020, 1030, and 1040 in FIGS. 10B-10C) is stored.

In step S807, the CPU 502 acquires part detailed information (1010 in FIG. 10A; 1020, 1030, and 1040 in FIGS. 10B-10C) based on the acquired part token URI. In step S808, the CPU 502 determines whether or not the reference index has reached the end of the child token information list. If the end has not been reached, the CPU 502 returns the processing to step S806 after incrementing the reference index by 1. On the other hand, the CPU 502 advances to step S809 if the reference index has reached the end of the child token information list. In step S809, the CPU 502 generates the DPP information screen 710 based on the MFP detailed information (1000 in FIG. 10A) and the part detailed information (1010 in FIG. 10A; 1020, 1030, and 1040 in FIGS. 10B-10C), and ends the processing in the present flowchart.

### <Detailed Information>

Detailed information of the MFP 100, and part detailed information of each of the plurality of cartridge, which are parts that are detachable from the MFP 100, will be described with reference to FIGS. 10A and 10B. 1000 in FIG. 10A indicates MFP detailed information. 1010 in FIG. 10A, and 1020, 1030, and 1040 in FIGS. 10B-10C each illustrate part detailed information. The MFP detailed information and the part detailed information include information for displaying the screens described with reference to FIG. 7.

As illustrated in 1000 in FIG. 10A, the MFP detailed information includes product information such as a token ID, product name, product ID, product category, location of manufacture, and date of manufacture, and document information such as a user manual and a recycle manual. Furthermore, the MFP detailed information includes information relating to parts attached to the product, and carbon-footprint-related information. On the other hand, the pieces of part detailed information in 1010 in FIG. 10A, and 1020, 1030, and 1040 in FIGS. 10B-10C each include product information including a token ID, product name, product ID, product category, location of manufacture, and date of manufacture of the corresponding part. Furthermore, the part detailed information includes document information such as a user manual and a recycle manual, and carbon-footprint-related information. That is, the MFP detailed information of the main unit of the product differs from the part detailed information in that the information relating to detachable parts is further included.

### <First Embodiment>

### <First MFP Part Exchange Flow>

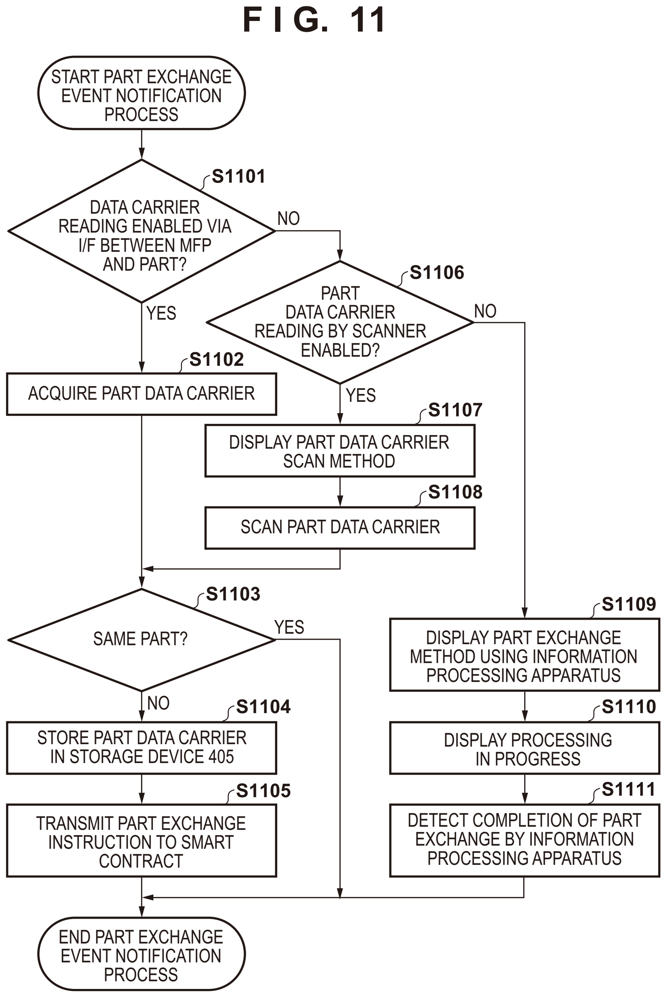

A first embodiment of the present disclosure will be described in the following. A procedure of processes when a part is exchanged with a replacement part in the MFP 100 pertaining to the present embodiment will be described with reference to FIG. 11. For example, the processes described in the following are realized by the CPU 402 of the MFP 100 loading and executing one or more programs stored in the ROM 404 and the storage device 405 in the RAM 403.

In step S1101, the CPU 402 determines whether or not communication from the MFP 100 to the blockchain 102 is enabled. The CPU 402 advances to step S1102 if the communication is enabled, and advances to step S1106 if communication is disabled. In step S1102, the CPU 402 reads the data carrier of the replacement part via the print engine 413 and the print controller 412, and stores the data carrier of the replacement part in the RAM 403. Subsequently, in step S1103, the CPU 402 determines whether or not the data carrier corresponding to the part to be exchanged stored in the storage device 405 and the data carrier of the replacement part are the same. The CPU 402 ends the processing in the present flowchart if the data carriers are the same, and otherwise advances to step S1104.

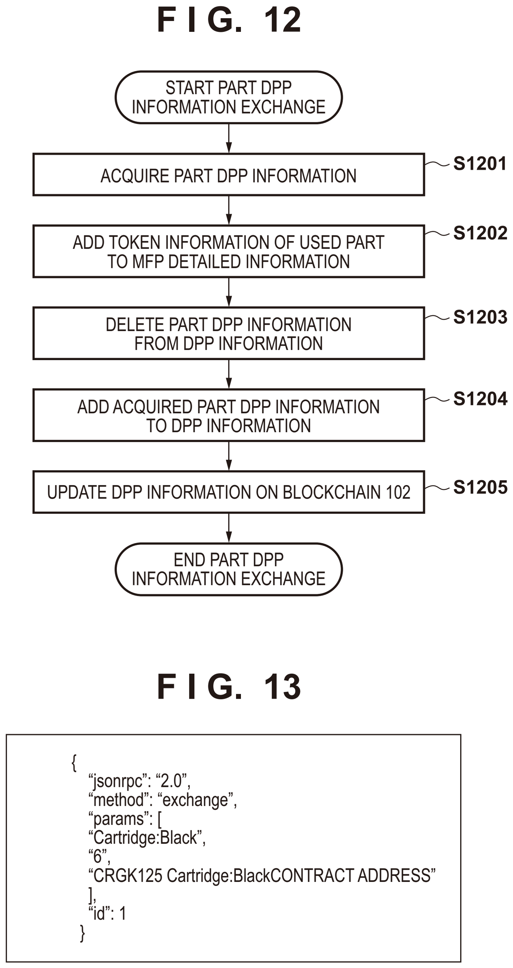

In step S1104, the CPU 402 stores, in the storage device 405, the data carrier stored in the RAM 403 in step S1102. In step S1105, the CPU 402 transmits part DPP information and a part exchange instruction (FIG. 13) to the smart contract 103 using information from the data carrier of the replacement part, and ends the processing in the present flowchart. FIG. 13 illustrates the content of the part exchange instruction. The part exchange instruction includes "exchange" indicating that the instruction is for part exchange, and, as parameters, information indicating that the replacement part is "Cartridge:Black" and the token ID is "6", and the corresponding contract address. Here, the information from the data carrier of the replacement part may include the corresponding part DPP information, or may include access information to the part DPP information stored on the blockchain.

If it is determined in step S1101 that communication is disabled, in step S1106, the CPU 402 determines whether or not reading of part data carriers by a scanner is enabled. The CPU 402 advances to step S1107 if the reading is enabled, and advances to step S1109 if the reading is disabled. In step S1107, the CPU 402 displays, on the operation panel 409, a part data-carrier scan method. Subsequently, in step S1108, the CPU 402 scans the data carrier of the part, and advances to step S1103. The processing in and following step S1103 has been described above, and description thereof is thus omitted.

On the other hand, in step S1109, the CPU 402 displays, on the operation panel 409, a part exchange method using the information processing apparatus 101. Here, the CPU 402 transmits a first part exchange transaction to the smart contract 103. In step S1110, the CPU 402 displays, on the operation panel 409, information to the effect that part exchange processing by the information processing apparatus 101 is in progress. Subsequently, in step S1111, the CPU 402 ends the processing in the present flowchart upon detection of completion of part exchange by the information processing apparatus 101.

According to the present embodiment, in accordance with whether or not communication with the blockchain 102 is enabled and whether or not the MFP 100 has the capability of reading part data carriers, the MFP 100 can switch between and execute methods for updating the DPP information and part DPP information after part exchange in such a manner. For example, if the MFP 100 cannot access the Internet, the DPP information and part DPP information can be updated via the information processing apparatus 101. Furthermore, if the MFP 100 is capable of scanning the data carrier of the replacement part, the data carrier of the part can be read by the MFP 100, and the DPP information and the part DPP information can be updated by the MFP 100 or the information processing apparatus 101.

### <First Part Exchange Smart Contract>

A procedure of processes in first part DPP information exchange processing by the MFP smart contract 103 in the present embodiment will be described with reference to FIG. 12. For example, the processes described in the following are each realized by a CPU of a device executing the smart contract 103 executing a program.

In step S1201, the MFP smart contract 103 acquires post-exchange part DPP information included in a part exchange instruction. In step S1202, the MFP smart contract 103 acquires, to add to the MFP detailed information 140, the token ID and the contract address of part detailed information to be exchanged. Furthermore, the MFP smart contract 103 adds the token ID and the contract address to replacement_history of the carbonfootprint attribute; replacement_history indicates the usage history of exchanged part(s).

In step S1203, the MFP smart contract 103 deletes the pre-exchange part DPP information from the replacement_parts attribute in the MFP detailed information 140 and the part information 127 included in the DPP information. Information regarding the deletion from the main unit (the date of removal, product information of the main unit, etc.) is written to the deleted part DPP information. In step S1204, the MFP smart contract 103 adds the post-exchange part DPP information to the replacement_parts attribute in the MFP detailed information 140 and the part information 127 included in the DPP information. Part DPP information is written together with the DPP information of the product by the present process when a part is newly attached in the manufacture process as well. When the writing is performed, the date of attachment, product information of the main body, etc., are written. In step S1205, the MFP smart contract 103 adds the DPP information to the blockchain 102, and ends the processing in the present flowchart.

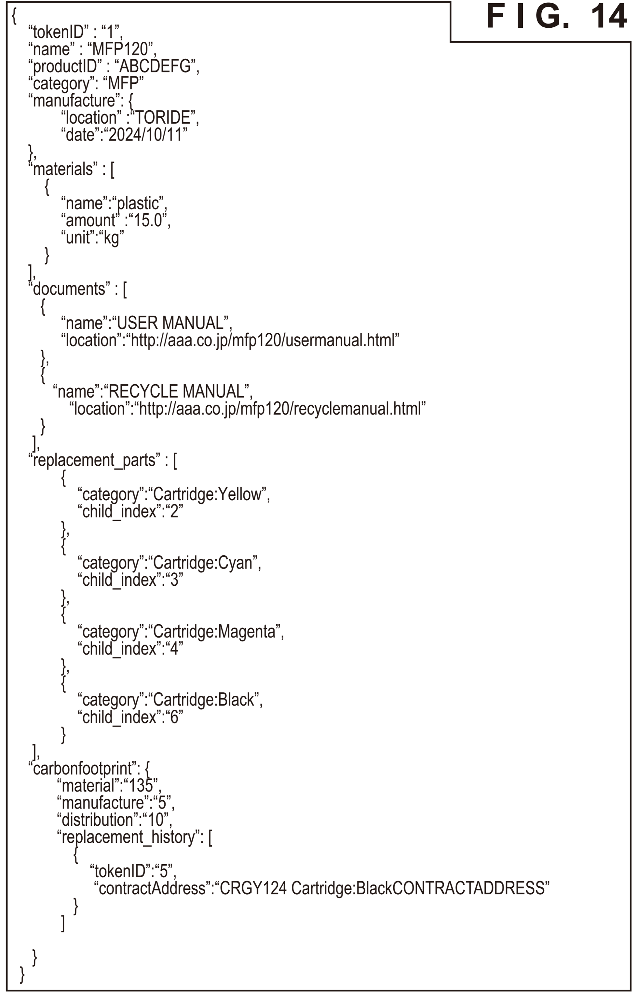

The updated MFP detailed information 140 is illustrated in FIG. 14. The information illustrated in FIG. 14 is information obtained by performing updating from the information illustrated in 1000 in FIG. 10A in accordance with the above-described processing in FIG. 12. When 1000 in FIG. 10A and the MFP detailed information in FIG. 14 are compared, it is indicated that, as the part, the black cartridge has been exchanged from a cartridge with the token ID "5" to that with the token ID "6", and it can be seen that the information regarding pre-exchange CRGK 114 is remaining at the end as a replacement history.

In such a manner, in accordance with information received from the information processing apparatus 101 (post-exchange part DPP information, etc.), the MFP smart contract 103 updates the part DPP information 124 associated with the MFP DPP information 120 to the post-exchange part DPP information 125. Here, the part DPP information 124 is an example of second DPP information, and the post-exchange part DPP information 125 is an example of third DPP information. Furthermore, according to the present embodiment, part DPP information also includes carbon-footprint-related information; thus, (specific) carbon-footprint information regarding the MFP product including information regarding an attached part (cartridge) can be acquired via the MFP DPP information 120. Note that, because the processing for updating part DPP information is performed as described above also when a part is exchanged with a replacement part, accurate carbon-footprint information can be acquired before and after the exchange. A procedure for displaying such carbon-footprint information will be described in the following.

### <First Carbon-Footprint Detailed Information Display Screen Flow>

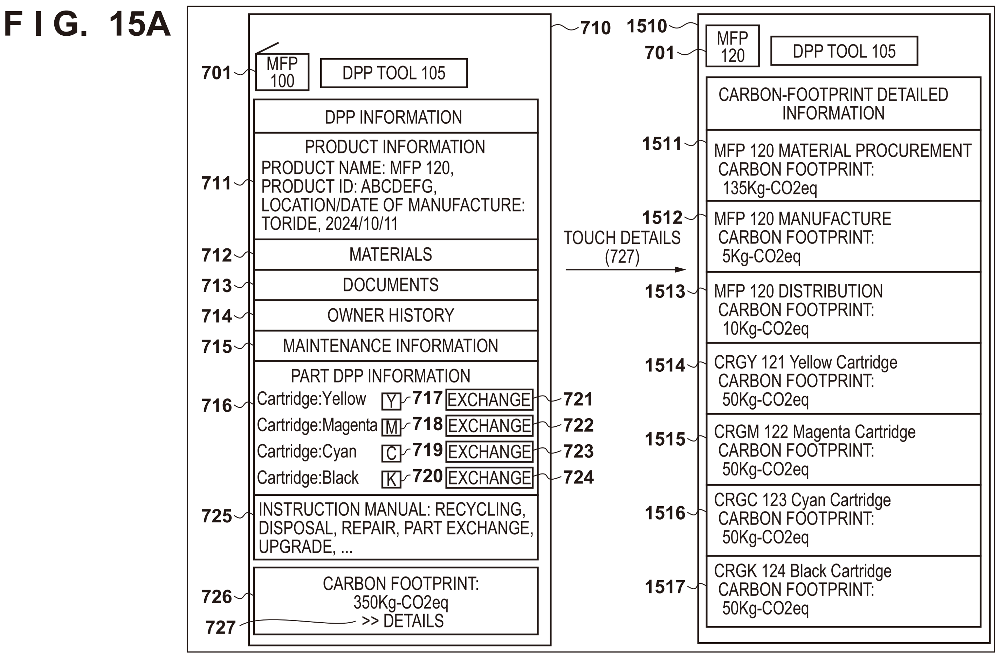

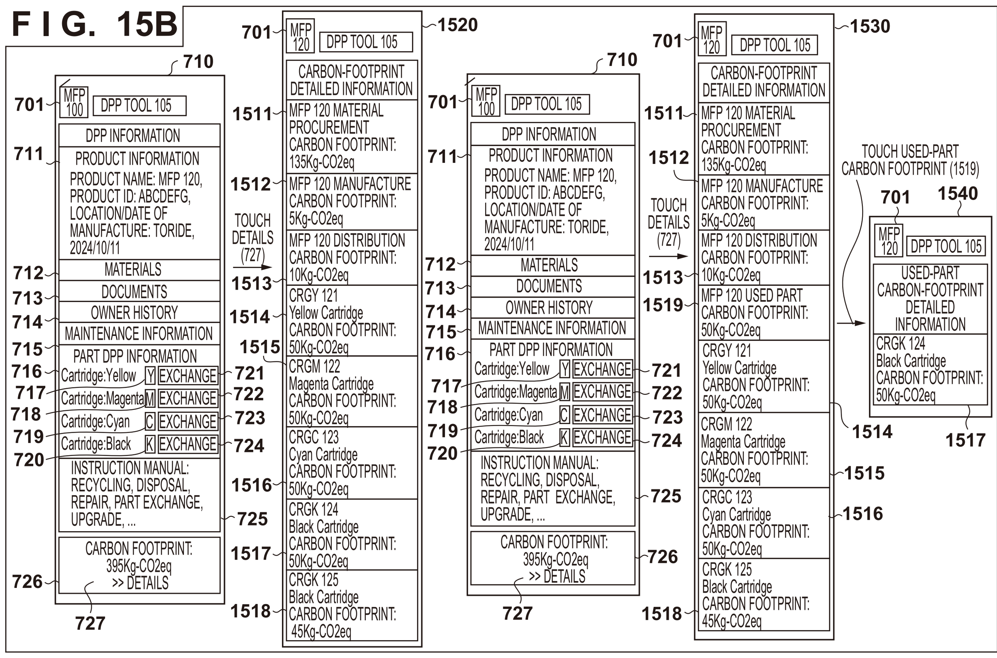

An example of display of a carbon-footprint detailed information screen displayed on the DPP tool 105 pertaining to the present embodiment will be described with reference to FIGS. 15A and 15B. FIG. 15A illustrates the DPP information screen 710 before part exchange. In carbon footprint 726, 350 Kg-CO2eq, which is the total of the carbon footprints of the MFP and the parts, is displayed, and, when the details button 727 is operated, the CPU 502 displays a carbon-footprint detailed information screen 1510 on the operation panel 509.

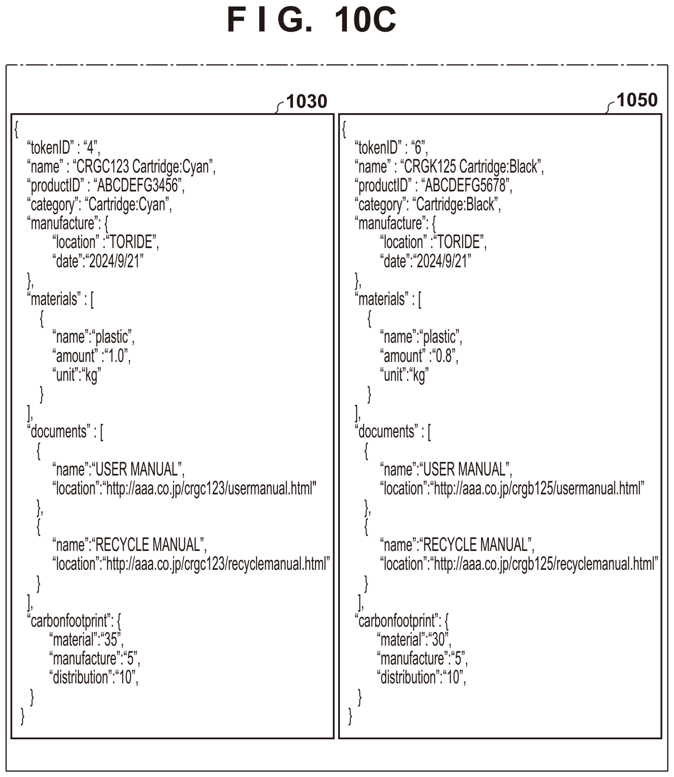

In the carbon-footprint detailed information screen 1510, "material" in the carbonfootprint attribute in the MFP detailed information 140 (1000 in FIG. 10A) is displayed in material procurement carbon footprint 1511. "manufacture" in the carbonfootprint attribute in the MFP detailed information 140 (1000 in FIG. 10A) is displayed in manufacture carbon footprint 1512. "distribution" in the carbonfootprint attribute in the MFP detailed information 140 (1000 in FIG. 10A) is displayed in distribution carbon footprint 1513. A total value of the parameters of the carbonfootprint attribute in the CRGY detailed information 141 (1010 in FIG. 10A) is displayed in carbon footprint 1514 as the CRGY part DPP information 121. A total value of the parameters of the carbonfootprint attribute in the CRGM detailed information 142 (1020 in FIG. 10B) is displayed in carbon footprint 1515 as the CRGM part DPP information 122. A total value of the parameters of the carbonfootprint attribute in the CRGC detailed information 143 (1030 in FIG. 10C) is displayed in carbon footprint 1516 as the CRGC part DPP information 123. A total value of the parameters of the carbonfootprint attribute in the CRGK detailed information 144 (1040 in FIG. 10B) is displayed in carbon footprint 1517 as the CRGK part DPP information 124.

FIG. 15B illustrates the DPP information screen 710 after CRGK 14 has been exchanged with CRGK 15. In carbon footprint 726, 395 Kg-CO2eq, which is the total of the carbon footprints of the MFP, the parts, and CRGK 14, which is a used part, is displayed. When the details button 727 is operated, the CPU 502 displays a carbon-footprint detailed information screen 1520.

In the carbon-footprint detailed information screen 1520, the carbon footprints displayed in the carbon-footprint detailed information screen 1510 are displayed. Furthermore, a total value of the parameters of the carbonfootprint attribute in the post-exchange CRGK detailed information 145 (1050 in FIG. 10C) is displayed in carbon footprint 1518.

Note that the post-exchange carbon footprints may be displayed as a carbon-footprint detailed information screen 1530. In the carbon-footprint detailed information screen 1530, carbon-footprint information displayed in the carbon-footprint detailed information screen 1520, other than CRGK carbon footprint 1517, is displayed. Furthermore, a total value of the carbon footprints stored in the pieces of part detailed information that can be referred to from replacement_history of the carbonfootprint attribute in the MFP detailed information 140 is displayed in used-part carbon footprint 1519. When used-part carbon footprint 1519 is operated, a used-part carbon-footprint detailed information screen 1540 including the carbon footprint of each used part is displayed. Here, while the carbon footprint of one used part is displayed, display corresponding to each used part is performed if a plurality of used parts are stored.

As described up to this point, the information processing apparatus pertaining to the present embodiment reads, from a product, a data carrier for accessing Digital Product Passport (DPP) information of the product that is managed on a blockchain. Furthermore, the present information processing apparatus uses information in the read data carrier to acquire first DPP information of a main unit of the product and second DPP information of one or more parts installed in the product, the first and second DPP information being managed on the blockchain. The second DPP information is managed on the blockchain in association with the first DPP information. Furthermore, the present information processing apparatus outputs a specific carbon footprint based on a carbon footprint of the product included in the acquired first DPP information and a carbon footprint of each of the one or more parts included in the acquired second DPP information. Furthermore, if a part among the one or more parts is exchanged with a replacement part, the present information processing apparatus outputs the specific carbon footprint, in which is further added a carbon footprint of the replacement part included in third DPP information that is DPP information of the replacement part. In such a manner, for example, a novel scheme for acquiring a carbon footprint of a product including parts can be provided according to the present disclosure. Furthermore, the processing for calculating the total of the carbon footprint of the product and the carbon footprints of parts attached to the product may be performed by the CPU 402 of the MFP 100. For example, the MFP 100 may acquire, from the blockchain 102, the carbon footprint of the MFP 100 (product) and the carbon footprints of parts attached to the MFP 100, and store the total value as the carbon footprint of the MFP 100. Note that the total value is stored in association with the DPP information of the MFP 100 on the blockchain 102.

### <Second Embodiment>

### <Second MFP Part Exchange Flow>

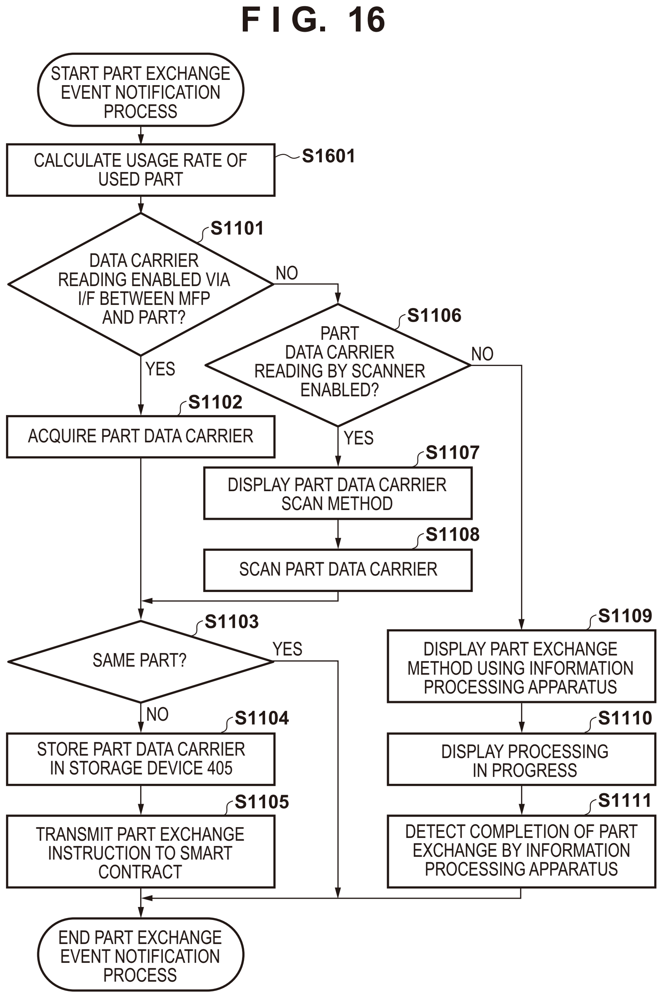

A second embodiment of the present disclosure will be described in the following. A procedure of processes when a part is exchanged with a replacement part in the MFP 100 in the present embodiment will be described with reference to FIG. 16. For example, the processes described in the following are realized by the CPU 402 of the MFP 100 loading and executing one or more programs stored in the ROM 404 and the storage device 405 in the RAM 403. The processes in steps S1101 to S1111 in FIG. 16 are the same as those in FIG. 11, and description thereof is thus omitted.

In step S1601, the CPU 402 acquires the usage rate of an exchanged part. For example, if the exchanged part is a toner cartridge, the ratio of the residual toner amount acquired last by communication with the exchanged toner cartridge is acquired as the usage rate. Furthermore, if the exchanged part is a paper feed cassette, a value obtained by dividing the usage count of the paper feed cassette that is stored in the storage device 405 by the maximum usage value of the paper feed cassette is acquired as the usage rate. The CPU 402 advances to step S1101 when the processing in step S1601 ends.

Following the processing in step S1104, in step S1602, the CPU 402 transmits, to the smart contract 103, a part exchange instruction including, as parameters, the part DPP information from the data carrier of the replacement part and the usage rate of the exchanged part acquired in step S1601. The CPU 402 ends the processing in the present flowchart once the transmission is complete.

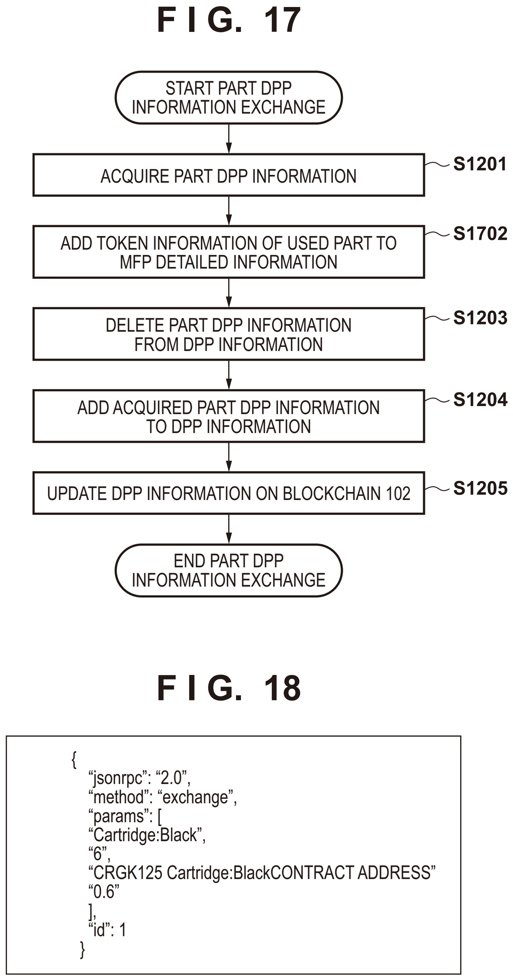

FIG. 18 illustrates the part exchange instruction pertaining to the present embodiment. The part exchange instruction illustrated in FIG. 18 further includes, in addition to the content of the part exchange instruction (FIG. 13) in the above-described first embodiment, the usage rate "0.6" of the exchanged part. In the present embodiment, a carbon footprint is acquired and displayed using this usage rate of the exchanged part. The processing will be described in detail later.

### <Second Part Exchange Smart Contract>

A procedure of processes in second part DPP information exchange processing by the MFP smart contract 103 in the present embodiment will be described with reference to FIG. 17. For example, the processes described in the following are each realized by a CPU of a device executing the smart contract 103 executing a program. The processes in steps S1201 to S1205 in FIG. 17 are the same as those in the flowchart in FIG. 12, and description thereof is thus omitted.

Following the processing in step S1201, in step S1702, the MFP smart contract 103 acquires the MFP detailed information 140, and the token ID and the contract address of part detailed information to be exchanged. Furthermore, the MFP smart contract 103 adds, to replacement_history of the carbonfootprint attribute, the token ID, the contract address, and the usage rate of the exchanged part notified as a parameter of the part exchange instruction; replacement_history indicates the usage history of exchanged part(s). The MFP smart contract 103 advances to the processing in step S1203 once the processing in step S1702 is complete.

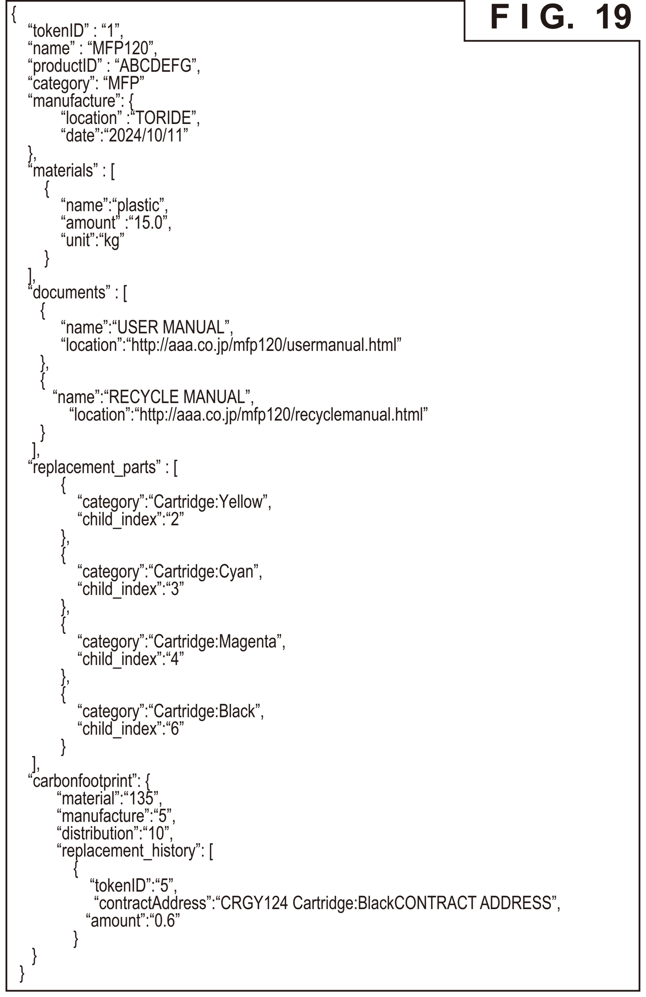

The updated MFP detailed information 140 is illustrated in FIG. 19. The information illustrated in FIG. 19 is information obtained by performing updating from the information illustrated in 1000 in FIG. 10A in accordance with the above-described processing in FIG. 17. When 1000 in FIG. 10A and the MFP detailed information in FIG. 19 are compared, it is indicated that, as the part, the black cartridge has been exchanged from a cartridge with the token ID "5" to that with the token ID "6", and it can be seen that the information regarding pre-exchange CRGK is remaining at the end as a replacement history. Furthermore, information regarding the usage rate "0.6" of the pre-exchange CRGK is included.

### <Second Carbon-Footprint Detailed Information Display Screen Flow>

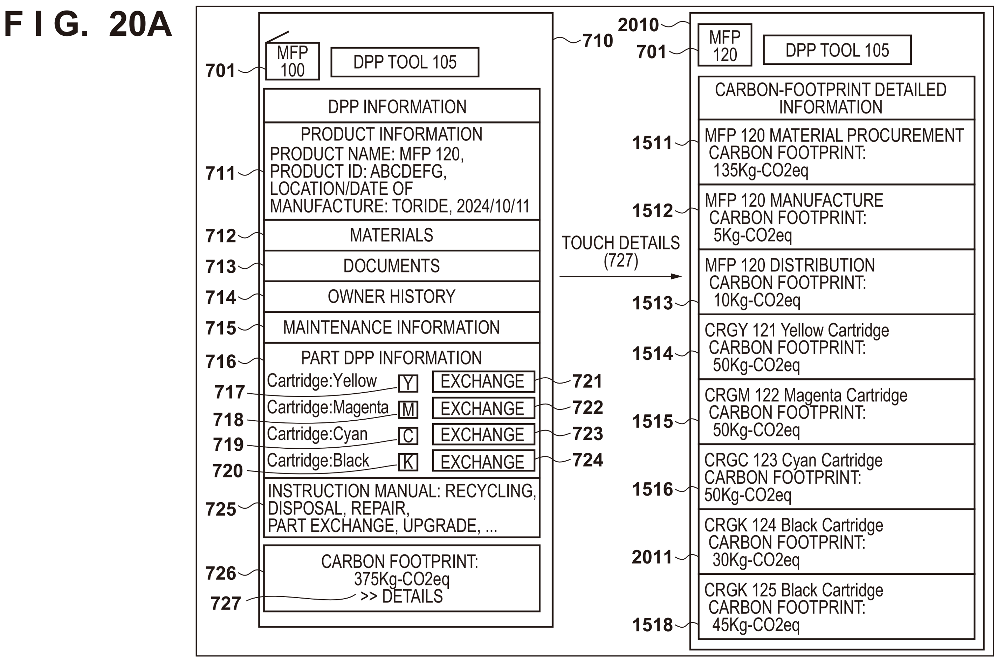

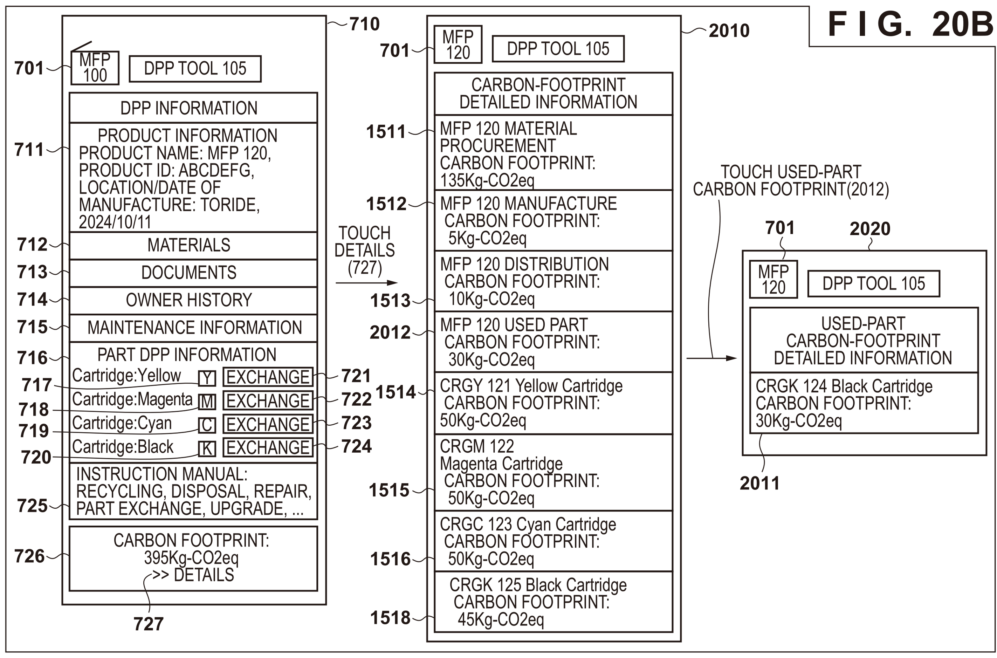

An example of display of a carbon-footprint detailed information screen displayed on the DPP tool 105 in the present embodiment will be described with reference to FIGS. 20A and 20B. The DPP information screen 710 indicates the DPP information screen 710 after CRGK 14 has been exchanged with replacement CRGK 15. In carbon footprint 726, 375 Kg-CO2eq, which is a value obtained by adding, to the total of the carbon footprints of the MFP and the parts, a value calculated by multiplying the carbon footprint and the usage rate of CRGK 14, which is a used part, is displayed. When the details button 727 is operated, the CPU 502 displays a carbon-footprint detailed information screen 2010. In the carbon-footprint detailed information screen 2010, the carbon footprints displayed in the carbon-footprint detailed information screen 1510 are displayed. Furthermore, a value obtained by multiplying the total value of the parameters of the carbonfootprint attribute in the CRGK detailed information 144 (1040 in FIG. 10B) and the usage rate is displayed in CRGK carbon footprint 2011.

Note that the post-exchange carbon footprints may be displayed as a carbon-footprint detailed information screen 2020. In the carbon-footprint detailed information screen 2020, carbon-footprint information displayed in the carbon-footprint detailed information screen 2010, other than CRGK carbon footprint 2011, is displayed. Furthermore, a total value of values each obtained by multiplying the carbon footprint stored in part detailed information by the usage rate of the corresponding part stored in replacement_history is displayed in used-part carbon footprint 2012. Such information can be referred to from replacement_history of the carbonfootprint attribute in the MFP detailed information 140 (1000 in FIG. 10A).

Furthermore, when used-part carbon footprint 2012 is operated, a used-part carbon-footprint detailed information screen 2030 is displayed. In the used-part carbon-footprint detailed information screen 2030, values each obtained by multiplying the carbon footprint of a used part stored in replacement_history of the carbonfootprint attribute by the usage rate of the part are displayed.

As described up to this point, if a part is exchanged with a replacement part, the information processing apparatus pertaining to the present embodiment updates and outputs a specific carbon footprint in accordance with the usage rate of the part. According to the present disclosure, the carbon footprint of a product including parts can be suitably acquired in such a manner even if a part is exchanged with a replacement part.

Note that, while an example in which a carbon footprint is acquired when a part is exchanged with a replacement part in accordance with a usage rate of the used part has been described in the present embodiment, a configuration may be adopted such that a carbon footprint is reacquired at a timing when the usage state of a part changes, such as when an image forming job ends, for example. Furthermore, at the timing when a user hands over the MFP 100 to a recycling company and the owner of the MFP detailed information 140 is changed to the recycling company, a carbon footprint may be reacquired in accordance with the usage record of the MFP 100 and the parts as well.

In the above-described first and second embodiments, examples have been described in which a carbon footprint is acquired when a cartridge is exchanged with a replacement cartridge as a part installed in the MFP 100. However, this should not be construed to limit the present disclosure; for example, the product may be an automobile, and the parts installed in the product may be the tires, brake pads, engine, and battery. According to the above, a carbon footprint can be acquired in accordance with the usage record of a product including parts.

Furthermore, while examples in which DPP-information-related details screens including carbon footprints are displayed on the operation panel of the information processing apparatus 101, a configuration may be adopted such that such details screens are displayed on the operation panel of the MFP 100. In this case, a configuration may be adopted such that at least some of the processes described as being executed by the information processing apparatus 101 are executed by the MFP 100. Note that a configuration may be adopted such that, in cases such as those in which the MFP 100 cannot access the blockchain or cannot read data carriers of the product and parts, some related processes are executed by the information processing apparatus 101 or another apparatus instead. That is, the processing by the information processing apparatus 101 and the MFP 100 described in the first and second embodiments may be executed by one or more other apparatuses included in the present system (product management system). Alternatively, in the present product management system, processing may be executed in a distributed fashion by the information processing apparatus 101, the MFP 100, and one or more other apparatuses cooperating with one another.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101) comprising:
reading means (511, 513) for reading, from a product (100), a data carrier (110) for accessing Digital Product Passport, DPP, information of the product that is managed on a blockchain (102);
acquisition means (502, 506) for acquiring, by using information in the read data carrier, first DPP information (120) that is DPP information of a main unit of the product that is managed on the blockchain, and second DPP information (121-124) that is DPP information of one or more parts (11-14) installed in the product, the second DPP information being managed on the blockchain in association with the first DPP information; and
control means (502) for outputting a specific carbon footprint based on a carbon footprint of the product included in the acquired first DPP information and a carbon footprint of each of the one or more parts included in the acquired second DPP information.

2. The information processing apparatus according to claim 1,
wherein the control means outputs, as the specific carbon footprint, a total of the carbon footprint of the product included in the first DPP information and the carbon footprint of each of the one or more parts included in the second DPP information.

3. The information processing apparatus according to claim 2,
wherein the control means individually outputs the carbon footprint of the product included in the first DPP information and the carbon footprint of each of the one or more parts included in the second DPP information.

4. The information processing apparatus according to claim 2,
wherein the control means, in a case where a part among the one or more parts is exchanged with a replacement part, outputs the specific carbon footprint, in which a carbon footprint of the replacement part included in third DPP information (125) that is DPP information of the replacement part is further added.

5. The information processing apparatus according to claim 4,
wherein the control means, in a case where a part among the one or more parts is exchanged with a replacement part, updates and output the specific carbon footprint in accordance with a usage rate of the removed part.

6. The information processing apparatus according to claim 2,
wherein the carbon footprint included in the second DPP information for each part of the one or more parts is updated in accordance with a usage rate of the part at a predetermined timing.

7. The information processing apparatus according to claim 6,
wherein the product is an image forming apparatus,
one of the one or more parts installed in the product is a cartridge, and
the predetermined timing corresponding thereto is when an image forming job ends.

8. The information processing apparatus according to claim 1,
wherein the control means displays a display screen (710) displaying the first DPP information and the second DPP information in addition to information regarding the specific carbon footprint.

9. The information processing apparatus according to claim 8,
wherein one or more display objects (721-724) for exchanging the one or more parts are displayed on the display screen.

10. The information processing apparatus according to claim 9,
wherein the control means, when an operation is performed on a display object among the one or more display objects, displays an image-capture screen (730) for capturing an image of a data carrier on a part corresponding to the display object that is for accessing the second DPP information of the part, and, when an image of the data carrier is captured, display an exchange screen (740) indicating that exchange will be performed from the part to a replacement part.

11. The information processing apparatus according to claim 10,
wherein a carbon footprint of the removed part and a carbon footprint of the replacement part are displayed on the exchange screen (740).

12. The information processing apparatus according to claim 2,
wherein the data carrier is a code image, and
the one or more processors execute the instructions to read the code image presented on the product by a camera (511).

13. The information processing apparatus according to claim 2,
wherein the data carrier is a Near Field Communication (NFC) tag (417), and
the one or more processors execute the instructions to read acquire information from the NFC tag by an NFC reader (513).

14. The information processing apparatus according to claim 8,
wherein, in a case where a part among the one or more parts installed in the product is exchanged with a replacement part, the product provides, to a smart contract (103), an exchange instruction (225) for updating, on the blockchain, the second DPP information of the part and third DPP information that is DPP information of the replacement part.

15. The information processing apparatus according to claim 14,
wherein the one or more processors execute the instructions to, in a case where a part among the one or more parts installed in the product is exchanged with a replacement part and the product cannot access the blockchain, transmit, to the smart contract in accordance with information presented by the product, an exchange instruction for updating, on the blockchain, the second DPP information of the part and third DPP information that is DPP information of the replacement part.

16. The information processing apparatus according to claim 14,
wherein the smart contract executes processing for updating the first DPP information, the second DPP information, and the third DPP information.

17. The information processing apparatus according to claim 16,
wherein the DPP information is managed as a Non-Fungible Token (NFT) on the blockchain.

18. A method for controlling an information processing apparatus (101), comprising:
reading, from a product (100), a data carrier (110) for accessing Digital Product Passport, DPP, information of the product that is managed on a blockchain (102);
by using information in the read data carrier, acquiring first DPP information (120) that is DPP information of a main unit of the product that is managed on the blockchain, and second DPP information (121-124) that is DPP information of one or more parts (11-14) installed in the product, the second DPP information being managed on the blockchain in association with the first DPP information; and
outputting a specific carbon footprint based on a carbon footprint of the product included in the acquired first DPP information and a carbon footprint of each of the one or more parts included in the acquired second DPP information.

19. A non-transitory computer-readable storage medium storing a computer program for causing a computer to execute each step in a method for controlling an information processing apparatus (101), the control method comprising:
reading, from a product (100), a data carrier (110) for accessing Digital Product Passport, DPP, information of the product that is managed on a blockchain (102);
by using information in the read data carrier, acquiring first DPP information (120) that is DPP information of a main unit of the product that is managed on the blockchain, and second DPP information (121-124) that is DPP information of one or more parts (11-14) installed in the product, the second DPP information being managed on the blockchain in association with the first DPP information; and
outputting a specific carbon footprint based on a carbon footprint of the product included in the acquired first DPP information and a carbon footprint of each of the one or more parts included in the acquired second DPP information.

20. A product management system comprising:
reading means (511, 513) for reading, from a product (100), a data carrier (110) for accessing Digital Product Passport, DPP, information of the product that is managed on a blockchain (102);
acquisition means (502, 506) for, by using information in the read data carrier, acquiring first DPP information (120) that is DPP information of a main unit of the product that is managed on the blockchain, and second DPP information (121-124) that is DPP information of one or more parts (11-14) installed in the product, the second DPP information being managed on the blockchain in association with the first DPP information; and
control means (502) for outputting a specific carbon footprint based on a carbon footprint of the product included in the acquired first DPP information and a carbon footprint of each of the one or more parts included in the acquired second DPP information.
